(19) **Europäisches Patentamt**
**European Patent Office**
**Office européen des brevets**

(11) **EP 4 668 954 A1**

(12) # EUROPEAN PATENT APPLICATION
published in accordance with Art. 153(4) EPC

(43) Date of publication:
**24.12.2025 Bulletin 2025/52**

(21) Application number: **24756508.8**

(22) Date of filing: **10.01.2024**

(51) International Patent Classification (IPC):
**H04W 72/115** (2023.01) **H04W 28/06** (2009.01)
**H04W 72/21** (2023.01) **H04W 72/231** (2023.01)
**H04W 72/0446** (2023.01) **H04W 72/1268** (2023.01)

(52) Cooperative Patent Classification (CPC):
**H04W 28/06; H04W 72/0446; H04W 72/115;**
**H04W 72/1268; H04W 72/21; H04W 72/231**

(86) International application number:
**PCT/JP2024/000236**

(87) International publication number:
**WO 2024/171656 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **17.02.2023 JP 2023023442**

(71) Applicant: **DENSO CORPORATION**
**Kariya-city, Aichi 448-8661 (JP)**

(72) Inventor: **NAGANO, Tatsuki**
**Kariya-city, Aichi 448-8661 (JP)**

(74) Representative: **TBK**
**Bavariaring 4-6**
**80336 München (DE)**

(54) **TERMINAL DEVICE, METHOD FOR TERMINAL DEVICE, AND BASE STATION DEVICE**

(57)     A terminal apparatus (10) includes: a receiver (122) configured to receive, from a base station apparatus (20), a radio resource control (RRC) message including a configured grant (CG) configuration, the CG configuration including information for configuring occasions of a plurality of physical uplink shared channel (PUSCH) transmissions based on a configured uplink grant and information for configuring a number of bits of uplink control information (UCI) including information related to an unused transmission occasion; a controller (110) configured to determine a number of bits of a bitmap of the UCI, based on the information for configuring the number of bits; and a transmitter (121) configured to perform each of the plurality of PUSCH transmissions, based on the information for configuring the occasions of the PUSCH transmissions.

Fig. 17

## Description

Cross-Reference To Related Application

The present application is based on and claims the benefit of priority to Japanese Patent Application No. 2023-23442 filed on February 17, 2023, the contents of which are incorporated herein by reference in its entirety.

Technical Field

The present disclosure relates to a terminal apparatus, a method of a terminal apparatus and a base station apparatus.

Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

In NPL 1, implementation of XR in Fifth Generation New Radio (5G NR) being radio specifications defined by the Third Generation Partnership Project (3GPP (trademark)) is studied.

Citation List

Non Patent Literature

[NPL 1] 3GPP TR 38.838 V17.0.0 (2021-12)
[NPL 2] 3GPP TS 38.214 V17.0.0 (2021-12)

## SUMMARY

It is assumed that XR is operated under various requirements including a low latency requirement. For XR traffic, use of scheduling by configured grant (CG) instead of scheduling by dynamic grant (DG) is studied for uplink transmission from a terminal apparatus. In an existing configuration, one transmission occasion is configured in a single period of CG. However, this configuration has possibility of not being able to satisfy XR requirements.

In view of the above, CG that configures a plurality of transmission occasions in one period is studied. Further, processing in which a terminal apparatus transmits, to a base station apparatus, information related to an unused occasion(s) of the plurality of transmission occasions is also studied. The inventors of the present invention found an issue that such a configuration requires the terminal apparatus and/or the base station apparatus of a procedure for appropriately determining the size (i.e., the number of bits or the bit width) of the information. However, such a procedure is not described in NPL 2. Note that the issue also occurs in a general terminal apparatus and a general base station apparatus other than those with XR implementation.

The present disclosure provides a technique for enabling appropriate determination of the size of information related to an unused occasion(s) of a plurality of transmission occasions.

A terminal apparatus according to the present disclosure includes: a receiver configured to receive, from a base station apparatus, a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; a controller configured to determine a number of bits of a bitmap of the UCI, based on the information for configuring the number of bits of the UCI; and a transmitter configured to perform each of a plurality of PUSCH transmissions, based on the information for configuring the plurality of PUSCH transmission occasions. The controller is configured to multiplex the bitmap of the UCI having the determined number of bits, in each of the plurality of PUSCH transmissions.

Further, a method of a terminal apparatus according to the present disclosure includes:

receiving, from a base station apparatus, a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion;
determining a number of bits of a bitmap of the UCI, based on the information for configuring the number of bits of the UCI; and performing each of a plurality of PUSCH transmissions,
based on the information for configuring the plurality of PUSCH transmission occasions. The method further includes multiplexing the bitmap of the UCI having the determined number of bits, in each of the plurality of PUSCH transmissions.

Furthermore, a base station apparatus according to the present disclosure includes: a transmitter configured to transmit, to a terminal apparatus, a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; and a receiver configured to receive a plurality of PUSCH transmissions. A bitmap of the UCI having a number of bits determined based on the information for configuring the number of bits of the UCI is multiplexed in each of the plurality of PUSCH transmissions.

According to the above configurations, it is possible to appropriately determine the size of information related to an unused occasion(s) of a plurality of transmission occasions. Note that the configurations above may exert, instead of or together with the above advantageous effects, other advantageous effects.

**BRIEF DESCRIPTION OF THE DRAWINGS**

The above and other objects, features, and advantages of the present disclosure will become more apparent in the following detailed description with reference to the accompanying drawings. The drawings are as follows:

Fig. 1 is a diagram illustrating a communication system S1 according to a first embodiment;
Fig. 2 is a diagram illustrating a U-plane protocol stack according to the first embodiment;
Fig. 3 is a diagram illustrating a C-plane protocol stack according to the first embodiment;
Fig. 4 is a block diagram illustrating a schematic hardware configuration of a terminal apparatus 10 according to the first embodiment;
Fig. 5 is a block diagram illustrating a schematic functional configuration of the terminal apparatus 10 according to the first embodiment;
Fig. 6 is a block diagram illustrating a schematic hardware configuration of a base station apparatus 20 according to the first embodiment;
Fig. 7 is a block diagram illustrating a schematic functional configuration of the base station apparatus 20 according to the first embodiment;
Fig. 8 is a diagram illustrating a radio frame configuration according to the first embodiment;
Fig. 9 is a sequence diagram illustrating steps of processing of CG Type 1;
Fig. 10 is a sequence diagram illustrating steps of processing of CG Type 2;
Fig. 11 is a diagram illustrating an example of a first table;
Fig. 12 is a diagram illustrating an example of a second table;
Fig. 13 is a diagram for describing CG in which one transmission occasion is configured in one period;
Fig. 14 is a diagram for describing CG in which a plurality of transmission occasions are configured in one period;
Fig. 15 is a sequence diagram illustrating steps of processing of CG Type 1 in a first aspect of the first embodiment;
Fig. 16 is a diagram illustrating an example of a third table of the first aspect according to the first embodiment;
Fig. 17 is a diagram for describing processing for transmitting information related to an unused occasion(s);
Fig. 18 is a sequence diagram illustrating steps of processing of CG Type 2 in the first aspect of the first embodiment;
Fig. 19 is a diagram illustrating another example of the third table of the first aspect according to the first embodiment; and
Fig. 20 is a diagram for describing another example of the processing for transmitting information related to an unused occasion(s).

**DETAILED DESCRIPTION**

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed unless the configurations are consistent with each other.

1. First Embodiment

1.1. Communication System

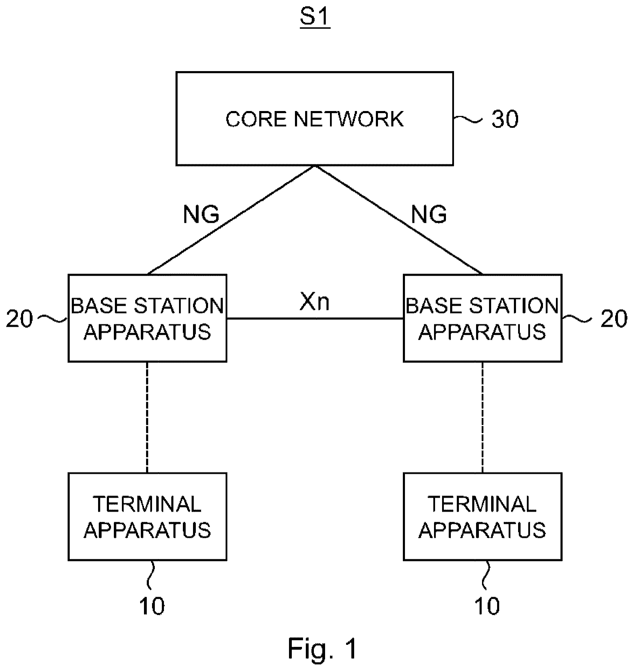

As illustrated in Fig. 1, a communication system S1 according to a first embodiment includes one or more terminal apparatuses 10, one or more base station apparatuses 20, and a core network 30. The communication system S1 is configured in accordance with certain technical specifications (TS). For example, the communication system S1 may be compliant with technical specifications defined by 3GPP (for example, 5G, 5G advanced, 6G, or the like).

In the communication system S1, a user plane in which user data is transmitted and received and a control plane in which control data is transmitted and received are separately configured. In other words, the communication system S1 supports C/U split. The user plane is abbreviated to the U plane, and the control plane is abbreviated to the C plane.

The terminal apparatus 10 may be a device that performs radio communication with the base station apparatus 20, and may be, for example, a user equipment (UE) that operates in accordance with 5G NR specifications of 3GPP. The terminal apparatus 10 may be an apparatus that is compliant with other older or newer 3GPP specifications.

The terminal apparatus 10 may be, for example, a mobile phone terminal such as a smartphone, a tablet terminal, a notebook PC, a communication module, a communication card, or an IoT device such as a surveillance camera and a robot. The terminal apparatus 10 may be a vehicle (for example, a car, a train, or the like), or an apparatus mounted on the vehicle. The terminal apparatus 10 may be a transport machine body other than the vehicle (for example, a ship, an airplane, or the like), or an apparatus mounted on the transport machine body. The terminal apparatus 10 may be a sensor, or an apparatus provided with the sensor. Note that the terminal apparatus 10 may be referred to as another name such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 is preferably an apparatus adapted to one or more of enhanced mobile broadband (eMBB), ultra-reliable and low-latency communications (URLLC), and massive machine type communications (mMTC).

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G New Radio (NR) specifications of 3GPP and connects to a 5G core network (5GC) of 3GPP, for example. The base station apparatus 20 may be an apparatus conforming to other older or newer specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

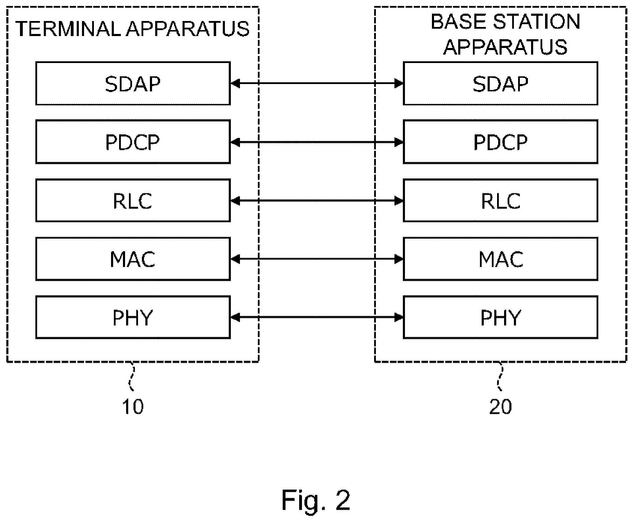

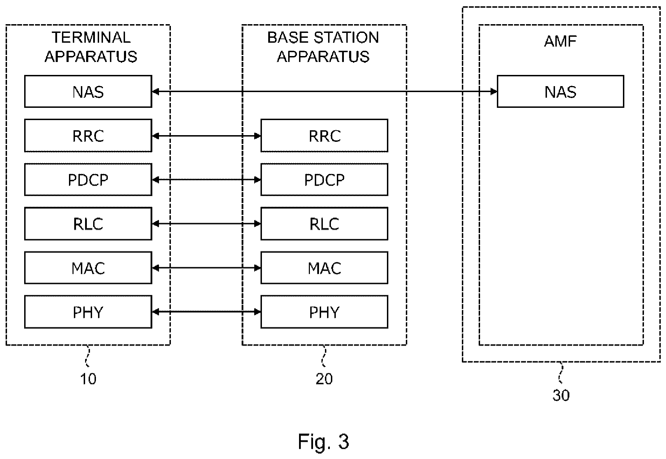

With reference to Fig. 2, a radio protocol architecture between the terminal apparatus 10 and the base station apparatus 20 will be described. With reference to Fig. 3, radio protocol architectures between the terminal apparatus 10 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side.

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). Each of the layers, except the Non-Access Stratum, is terminated in the base station apparatus 20 on the network side. The Non-Access Stratum is terminated in the AMF of the core network 30 on the network side.

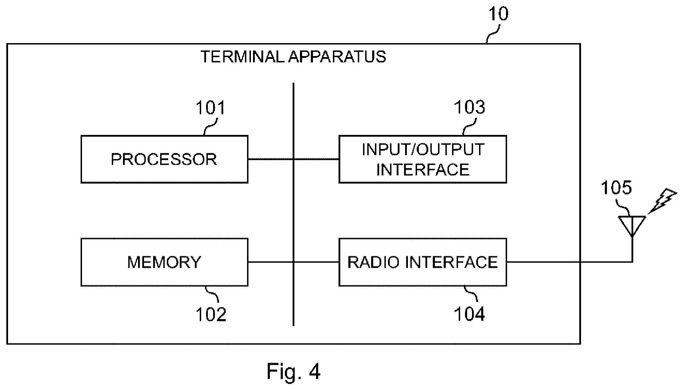

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user. The input/output interface 103 is a touch panel, for example.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

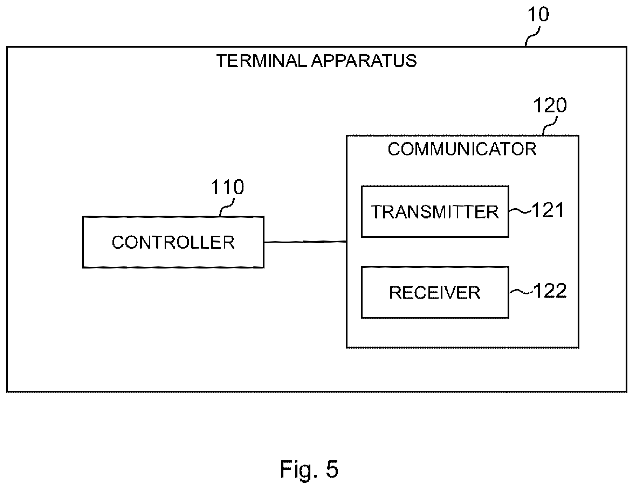

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120. In other words, the controller 110 performs, via the communicator 120, transmission/reception of data/information/message.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. The communicator 120 may include two or more radio interfaces 104 and two or more antennas 105.

When the controller 110 operates, the various types of processing of the terminal apparatus 10 according to the present embodiment are executed.

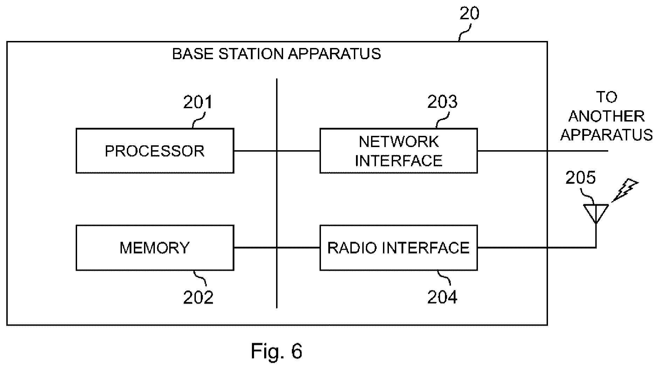

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the terminal apparatus 10 via the antenna 205.

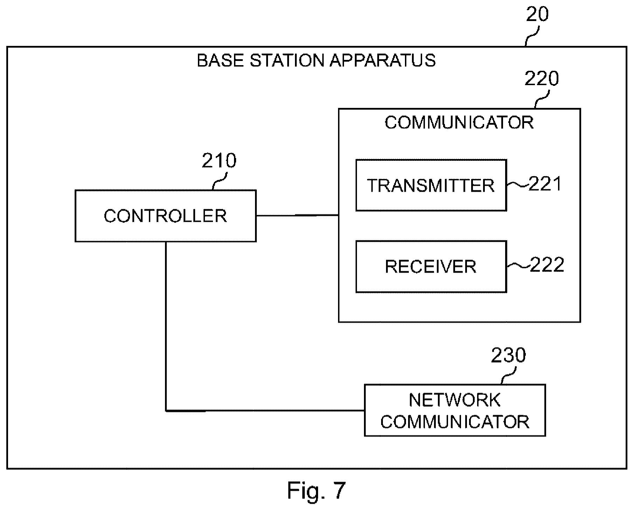

As illustrated in Fig. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. In other words, the controller 210 performs, via the communicator 220, transmission/reception of data/information/message.

For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. The communicator 220 may include two or more radio interfaces 204 and two or more antennas 205.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 according to the present embodiment are executed.

### 1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period (GP) for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) $\Delta f$ in the frequency domain. In the communication system S1, a plurality of subcarrier spacings $\Delta f$ may be applied. The subcarrier spacing $\Delta f$ is expressed by the following expression, for example.

$$\Delta f = 2^\mu \cdot 15 \ [\text{kHz}]$$

Here, $\mu$ is an integer of 0 or greater, and may be any one of values of 0, 1, 2, 3, 4, 5, and 6. Accordingly, the subcarrier spacing $\Delta f$ [kHz] may be any one of values of 15, 30, 60, 120, 240, 480, and 960. Note that $\mu$ may be a value of 7 or greater.

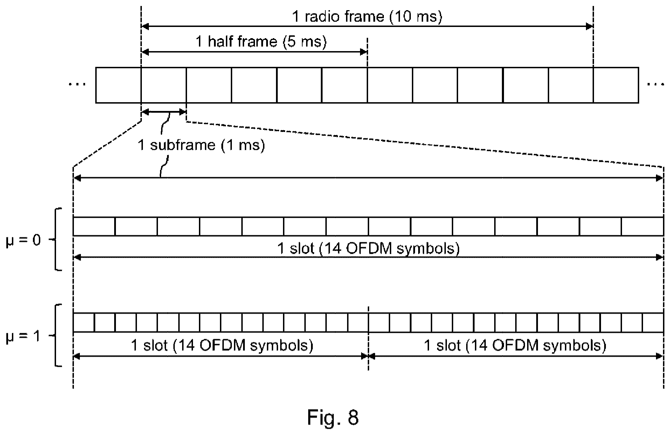

In the time domain of OFDM, as illustrated in Fig. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing $\Delta f$.

One subframe includes one or more slots. The number Ns of slots included in one subframe is dependent upon the value of $\mu$ described above, ultimately the subcarrier spacing $\Delta f$. The number Ns of slots is expressed by the following expression, for example.

$$\text{Ns} = 2^\mu$$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink common channel (DownLink Shared Channel, DL-SCH) and an uplink common channel (UpLink Shared Channel, UL-SCH). For example, data in downlink is also referred to as data of the DL-SCH. For example, data in uplink is also referred to as data of the UL-SCH. Here, the data of the DL-SCH includes user data in downlink. The data of the UL-SCH includes user data in uplink.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. In the present embodiment, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

The terminal apparatus 10 may monitor (and/or receive) the PDCCH and detect (and/or receive) the DCI format.

The terminal apparatus 10 transmits, to the base station apparatus 20, uplink control information (UCI) by using a PUCCH being a physical channel.

The UCI includes control information such as a scheduling request (SR), an Ack/Nack in HARQ, and channel state information (CSI). The UCI is mapped to the PUCCH or the PUSCH, and corresponds to Layer 1 signaling.

The base station apparatus 20 transmits, to the terminal apparatus 10, a control element (CE) of a MAC layer by using a DL-SCH being a transport channel. The downlink MAC CE is mapped to a PDSCH via the DL-SCH, and corresponds to Layer 2 signaling.

The terminal apparatus 10 transmits, to the base station apparatus 20, a control element (CE) of a MAC layer by using a UL-SCH being a transport channel. The uplink MAC CE includes control information such as buffer status reporting (BSR). The uplink MAC CE is mapped to a PUSCH via the UL-SCH, and corresponds to Layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation) message will be described. The user equipment assistance information message is an RRC message transmitted from the terminal apparatus 10 to the base station apparatus 20 using SRB1 or SRB3. The DCCH is used to transmit the user equipment assistance information message. The user equipment assistance information message is used to notify the base station apparatus 20 of various pieces of information (UE assistance information) related to the terminal apparatus 10.

1.4. Uplink Scheduling

1.4.1. Dynamic Grant (DG)

DG is a scheduling method for allocating radio resources for a PUSCH according to an uplink grant procedure. The base station apparatus 20 transmits an uplink grant on a PDCCH to the terminal apparatus 10. The terminal apparatus 10 performs transmission of a PUSCH according to the uplink grant. For example, the base station apparatus 20 may use a DCI format with CRC scrambled with a C-RNTI and/or an MCS-C-RNTI (i.e., a DCI format to be used for scheduling of the PUSCH) to allocate radio resources for the PUSCH, and the terminal apparatus 10 may perform uplink transmission by using the allocated radio resources for the PUSCH. Here, a new data indicator included in the DCI format with the CRC scrambled with the C-RNTI and/or the MCS-C-RNTI being attached may be set at 0 or 1. The base station apparatus 20 may use a DCI format with CRC scrambled with a CS-RNTI (i.e., a DCI format to be used for scheduling of the PUSCH) to allocate radio resources for the PUSCH, and the terminal apparatus 10 may perform uplink transmission by using the allocated radio resources for the PUSCH. Here, a new data indicator included in the DCI format with the CRC scrambled with the CS-RNTI may be set at 1.

1.4.2. Configured Grant (CG)

CG is a scheduling method for allocating radio resources for a PUSCH without the dynamic uplink grant procedure. The base station apparatus 20 transmits an RRC message including a CG parameter to the terminal apparatus 10. The CG parameter is included in a ConfiguredGrantConfig information element (IE), which is an example of an RRC IE.

For example, the base station apparatus 20 may transmit an RRC message including a parameter related to CG (i.e., a ConfiguredGrantConfig IE) for a given serving cell, to the terminal apparatus 10. In other words, the parameter related to CG (i.e., a Configured-GrantConfig IE) may be configured for one or each of a plurality of serving cells. The base station apparatus 20 may transmit an RRC message including a parameter related to CG (i.e., a ConfiguredGrantConfig IE) for a given UL-BWP, to the terminal apparatus 10. In other words, the parameter related to CG (i.e., a Configured-GrantConfig IE) may be configured for one or each of a plurality of UL-BWPs. The terminal apparatus 10 may identify the parameter related to CG (i.e., the Configured-GrantConfig IE) for the one or each of the plurality of UL-BWPs.

ConfiguredGrantConfig IE includes a parameter "periodicity" related to periodicity of transmission using a PUSCH. Note that the parameter "periodicity" is configured in units of the number of slots or the number of symbols. Alternatively, the parameter "periodicity" is configured in units of frame per second (FPS).

One or more transmission occasions for the PUSCH are configured by CG. The terminal apparatus 10 may perform transmission of the PUSCH in the transmission occasion(s). Here, the transmission occasion may be interpreted as a resource (for example, a PUSCH resource). Note that the terminal apparatus 10 supports one transport block (TB) in one transmission occasion. In other words, one TB is transmitted in one transmission occasion.

CG includes two types, i.e., Type 1 and Type 2. Each of Type 1 and Type 2 will be described below.

(1) Type 1

In Type 1, the terminal apparatus 10 performs transmission of a signal (for example, transmission on a PUSCH) at configured periodicity without trigger by DCI (for example, a DCI format used for scheduling of the PUSCH).

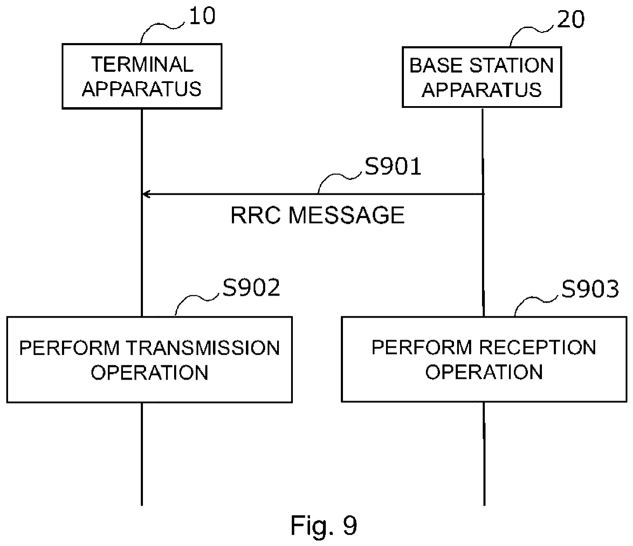

As illustrated in Fig. 9, the communicator 220 of the base station apparatus 20 transmits an RRC message including a CG parameter to the terminal apparatus 10 (S901).

The controller 110 of the terminal apparatus 10 performs a periodic PUSCH transmission operation according to the CG parameter (S902). For example, the terminal apparatus 10 may store the RRC message including the CG parameter, as a configured uplink grant. Here, such an RRC message including a CG parameter to be used for scheduling of a PUSCH is also referred to as an uplink grant. The terminal apparatus 10 may consider that, after an uplink grant is configured for CG Type 1, the uplink grant sequentially occurs (repeated) in SFNs and/or slot numbers satisfying a certain mathematical expression. In other words, the terminal apparatus 10 may consider that the stored uplink grant sequentially occurs in the SFNs and/or slot numbers satisfying the certain mathematical expression, to perform transmission of a PUSCH.

The controller 210 of the base station apparatus 20 performs a periodic PUSCH reception operation (S903). The controller 210 may consider that the uplink grant stored in the terminal apparatus 10 sequentially occurs (is sequentially repeated) in the SFNs and/or slot numbers satisfying the certain mathematical expression, to perform reception of a PUSCH.

Note that, for one or more serving cells or one or more UL-BWPs, a plurality of CGs may be configured for the terminal apparatus 10. For example, the base station apparatus 20 may transmit an RRC message including a parameter related to a first CG (for example, a first CG configuration) and a parameter related to a second CG (for example, a second CG configuration), to the terminal apparatus 10. The terminal apparatus 10 may perform transmission of a first PUSCH associated with the first CG (for example, the first CG configuration) and perform transmission of a second PUSCH associated with the second CG (for example, the second CG configuration).

(2) Type 2

In Type 2, the terminal apparatus 10 performs transmission of a signal (for example, transmission on a PUSCH) at configured periodicity according to activation by DCI scrambled with a CS-RNTI (for example, a DCI format used for scheduling of the PUSCH).

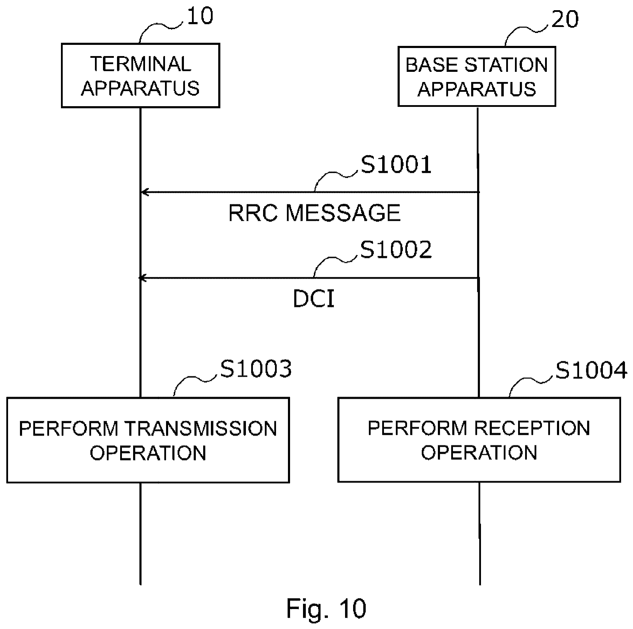

As illustrated in Fig. 10, the communicator 220 of the base station apparatus 20 transmits an RRC message including a CG parameter to the terminal apparatus 10 (S 1001). Next, the communicator 220 transmits DCI scrambled with a CS-RNTI to the terminal apparatus 10 (S 1002). Through this, a periodic transmission operation by the terminal apparatus 10 using a PUSCH is activated.

The controller 110 of the terminal apparatus 100 performs the periodic PUSCH transmission operation according to the CG parameter and/or DCI (S1003). For example, in a case where DCI with CRC scrambled with a CS-RNTI being attached (i.e., DCI to be used for scheduling of the PUSCH) indicates activation of CG (in other words, in a case where a PDCCH indicates activation of CG), the terminal apparatus 10 may store the DCI as a configured uplink grant. Here, such DCI (DCI format) to be used for scheduling of a PUSCH is also referred to as an uplink grant. "A case where DCI indicates activation of CG" may include a case where certain information (for example, one or each of a plurality of information fields) included in the DCI is set at a certain value. For example, "a case where DCI indicates activation of CG" may include a case where a new data indicator included in the DCI is set at 0. The terminal apparatus 10 may consider that, after an uplink grant is configured for CG Type 2, the uplink grant sequentially occurs (is repeated) in SFNs and/or slot numbers satisfying a certain mathematical expression. In other words, the terminal apparatus 10 may consider that the stored uplink grant sequentially occurs in the SFNs and/or slot numbers satisfying the certain mathematical expression, to perform PUSCH transmission.

The controller 210 of the base station apparatus 20 performs a periodic PUSCH reception operation (S1004). The controller 210 may consider that the uplink grant stored in the terminal apparatus 10 sequentially occurs (is sequentially repeated) in the SFNs and/or slot numbers satisfying the certain mathematical expression, to perform PUSCH reception.

Note that, for one or more serving cells or one or more UL-BWPs, a plurality of CGs may be configured for the terminal apparatus 10. For example, the base station apparatus 20 may transmit an RRC message including a parameter related to a first CG (for example, a first CG configuration) and a parameter related to a second CG (for example, a second CG configuration), to the terminal apparatus 10. In a case where the first CG (for example, the first CG configuration) is activated by DCI, the terminal apparatus 10 may perform transmission of a first PUSCH associated with the first CG (for example, the first CG configuration). In a case where the second CG (for example, the second CG configuration) is activated by DCI, the terminal apparatus 10 may perform transmission of a second PUSCH associated with the second CG (for example, the second CG configuration). For example, to activate transmission of each of the plurality of PUSCHs, information indicating an index of a CG configuration (for example, a value of the information indicating the index of the CG configuration) may be included in DCI. For example, in a case where the terminal apparatus 10 has received DCI including information indicating an index of the first CG configuration (for example, information indicating an index "0" of the first CG configuration), the terminal apparatus 10 may perform (or activate) transmission of a PUSCH based on the first CG configuration. In a case where the terminal apparatus 10 has received DCI including information indicating an index of the second CG configuration (for example, information indicating an index "1" of the second CG configuration), the terminal apparatus 10 may perform (or activate) transmission of a PUSCH based on the second CG configuration. Here, the value of information indicating an index of a CG configuration (for example, a value of the information indicating the index of the first CG configuration and/or a value of the information indicating the index of the second CG configuration) may be set in a field of information indicating an HARQ process number.

1.5. Resource Allocation

In DG and CG, the terminal apparatus 10 may receive information for determining resource allocation for uplink transmission (also referred to as information related to a table, below), from the base station apparatus 20. For example, the table is a time domain resource assignment (TDRA) table. In the following, the table is referred to as a "first table". The information is referred to as "first table information". For example, the "first table information" may be included in a parameter related to a PUSCH. Specifically, the base station apparatus 20 may transmit an RRC message including one or a plurality of parameters for TDRA (for example, information related to a table) for transmission of a PUSCH, and the terminal apparatus 10 may determine a time-domain resource(s) for the transmission of the PUSCH, based on the one or plurality of parameters for TDRA. A case where one or a plurality of parameters for TDRA are described as a table will be defined below. However, the one or plurality of parameters for TDRA may be defined in any form. For example, an index (indices) (and/or an order) may be defined to correspond to the one or plurality of respective parameters for TDRA and may correspond to indices in a table to be described below.

In the first table, one index (or value) is associated with one PUSCH transmission occasion. Specifically, one index (or value) is associated with one or more parameters related to a resource(s) for PUSCH transmission.

For example, the first table may include one of, or a combination of two or more of parameters (a1) to (a3) below.

(a1) k2: information related to a slot in which uplink transmission (i.e., PUSCH transmission) is performed. Specifically, k2 may indicate an offset between a slot in which an RRC message or DCI is received and a slot in which the PUSCH transmission is to be performed. Here, an "RRC message or DCI is received" may include an "uplink grant is considered to have occurred". "Uplink transmission (i.e., PUSCH transmission) is performed" may include an uplink transmission occasion. In other words, the offset indicated by k2 may include an offset between a slot in which an RRC message or DCI is received and a PUSCH transmission occasion. As k2, a default value may be used according to SCS.
(a2) Start and length indicator value (SLIV): information indicating a combination of a start symbol position S in a slot where uplink transmission (i.e., PUSCH transmission) is performed and a consecutive symbol length L from the start symbol position S. The slot in which uplink transmission (i.e., PUSCH transmission) is performed may include the slot of an uplink transmission occasion (i.e., a PUSCH transmission occasion). Instead of the SLIV, the start symbol position S and the symbol length L may be individually indicated.

(a3) Mapping type: information indicating the mapping type of uplink transmission (i.e., PUSCH transmission). The mapping type includes Type A and Type B.

Similarly, the first table information may include one of, or a combination of two or more of parameters (a1) to (a3) above. The base station apparatus 20 may transmit an RRC message including the first table information to the terminal apparatus 10. The first table information may be included in a parameter related to a PUSCH (for example, a PUSCH-ConfigCommon IE). The terminal apparatus 10 configures the first table, based on the first table information.

The first table information may be configured for each cell, each UE, and/or each DCI format. In other words, a plurality of first tables may be configured. Note that a default table may be used as the first table.

A table to be actually used (or selected) may be determined from among a plurality of first tables, based on (b1) to (b4) below.

(b1) DCI format
(b2) RNTI
(b3) PDCCH search space
(b4) Information of whether or not a first table is configured for each cell, each UE, and/or each DCI format.

An example where a cell-specific first table is configured will be described below. The cell-specific first table may be configured by using a PUSCH-ConfigCommon IE included in an RRC message. The base station apparatus 20 transmits an RRC message including a PUSCH-ConfigCommon IE to the terminal apparatus 10. The PUSCH-ConfigCommon IE includes one or more PUSCH-TimeDomainResourceAllocationList IE, as first table information. The PUSCH-TimeDomainResourceAllocationList IE includes k2, mapping Type, and startSymbolAndLength. k2 corresponds to (a1) above. mappingType corresponds to (a3) above. startSymbolAndLength corresponds to (a2) above.

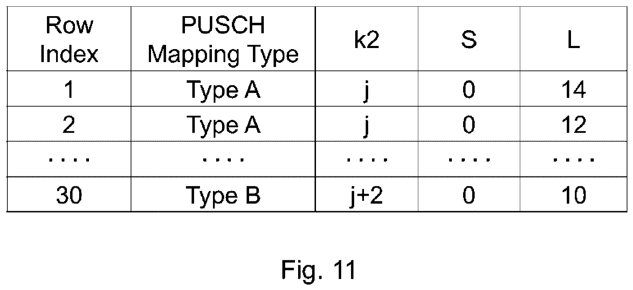

As illustrated in Fig. 11, the terminal apparatus 10 may configure the first table, based on the first table information. The first table includes information indicating row indices for referring to respective rows. In the example in Fig. 11, each row index is associated with parameters (a1) to (a3). Note that j indicated as a value of k2 is a value determined according to parameter $\mu_{PUSCH}$ denoting SCS of a PUSCH. In other words, j indicated as a value of k2 is determined based on SCS configured for a UL-BWP in which corresponding PUSCH transmission is performed. For example, the base station apparatus 20 may transmit an RRC message including information indicating SCS for one or each of a plurality of UL-BWPs, to the terminal apparatus 10. The base station apparatus 20 transmits information indicating row index m to the terminal apparatus 10.

In a case of CG Type 1, the base station apparatus 20 transmits an RRC message including information indicating row index m to the terminal apparatus 10. For example, the information indicating row index m may be included in a parameter related to CG (i.e., a ConfiguredGrantConfig IE). The information indicating row index m may be indicated by a timeDomainAllocation IE included in the ConfiguredGrantConfig IE. Note that the size of the information (IE) (i.e., the number of bits or the bit width) indicating row index m may be determined based on the number of entries of the first table, for example. In the example in Fig. 11, since the number of entries of the first table is 30, the size of the information indicating row index m may be 5 bits. In a case where the terminal apparatus 10 has received the RRC message including the information indicating row index m from the base station apparatus 20, the terminal apparatus 10 may refer to row index m + 1 in the first table. The terminal apparatus 10 may use parameters (a1) to (a3) associated with row index m + 1 in the first table, to determine a resource(s) for uplink transmission.

In a case of CG Type 2, the base station apparatus 20 transmits DCI including information indicating row index m (i.e., an information field set at a value indicating row index m) to the terminal apparatus 10. In other words, the information indicating row index m may be indicated by a value set in a TDRA field of DCI. Here, the size of the TDRA field (i.e., the number of bits or the bit width) may be determined based on the number of entries of the first table, for example. In the example in Fig. 11, since the number of entries of the first table is 30, the size of the TDRA field may be 5 bits. In a case where the terminal apparatus 10 has received the DCI including the information indicating row index m from the base station apparatus 20, the terminal apparatus 10 may refer to row index m + 1 in the first table. The terminal apparatus 10 may use parameters (a1) to (a3) associated with row index m + 1 in the first table, to determine a resource(s) for uplink transmission.

In DG, the base station apparatus 20 can further schedule a plurality of PUSCH transmission occasions by using single DCI. The terminal apparatus 10 may receive information related to a table for determining resource allocation for uplink transmission, from the base station apparatus 20. The table is a TDRA table and will be referred to as a "second table" below. The information is referred to as "second table information". In other words, the second table information may include one of, or a combination of two or more of parameters (a1) to (a3) above. For example, the "second table information" may be included in a parameter related to a PUSCH.

In the second table, one index (or value) is associated with one or a plurality of PUSCH transmission occasions. Specifically, one index (or value) is associated with one or more parameters related to a resource(s) for one or a plurality of PUSCH transmissions.

For example, the base station apparatus 20 may transmit an RRC message including the second table information to the terminal apparatus 10. The second table information may be included in a parameter related to a PUSCH (for example, a PUSCH-Config IE). Note that the second table information may be configured for each cell, each UE, and/or each DCI format. In other words, a plurality of second tables may be configured. Note that a default table may be used as the second table.

For example, the PUSCH-Config IE may include a pusch-TimeDomainAllocationListForMulti-PUSCH IE, as second table information. The pusch-TimeDomainAllocationListForMultiPUSCH IE may include one or more PUSCH-TimeDomainResourceAllocation IEs. Each PUSCH-TimeDomainResourceAllocation IE may include k2 and one or more puschAllocationList IEs. The puschAllocationList IE may include one of, or a combination of two or more of mappingType, startSymbolAndLength, startSymbol, and length. k2 corresponds to (a1) above. mappingType corresponds to (a3) above. startSymbolAndLength, startSymbol, and length correspond to (a2) above. In this example, one k2 may be associated with a plurality of PUSCH-Allocation IEs. In other words, one k2 may be configured commonly for the plurality of PUSCH-Allocation IEs. In this case, k2 may indicate the slot including the first transmission occasion of two to eight consecutive PUSCH transmission occasions. In other words, the terminal apparatus 10 may perform uplink transmission in the consecutive PUSCH transmission occasions, based on the second table information.

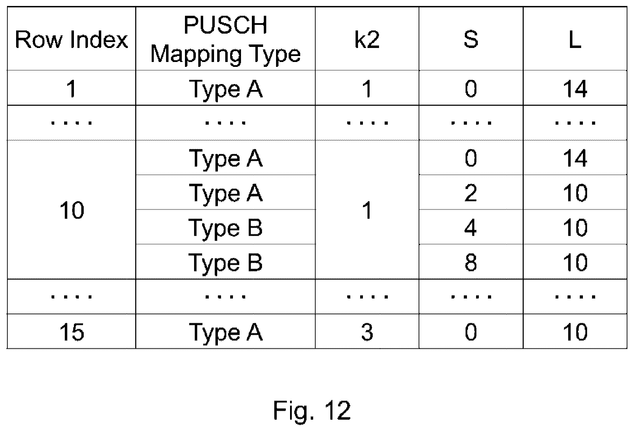

As illustrated in Fig. 12, the terminal apparatus 10 may configure the second table, based on the second table information. The second table includes information indicating row indices for referring to respective rows. In the example in Fig. 12, a given row index is associated with a plurality of PUSCH transmission occasions. For example, in a case where a row index "10" in the second table is indicated by information indicating a row index included in DCI (for example, a value set in the information indicating row index), a plurality of transmission occasions corresponding to the row index "10" are scheduled. Specifically, in a case where the row index "10" is indicated, the terminal apparatus 10 may use four parameter sets corresponding to four respective transmission occasions. Parameters (a2) and (a3) are configured individually for each of the four transmission occasions. Note that parameter (a1) is configured commonly for the four transmission occasions.

Note that, in another example, parameter (a1) may be configured individually for each of the four transmission occasions. In this case, a parameter extendedK2 included in a PUSCH-Allocation IE may be used. In other words, the base station apparatus 20 may configure parameters (a1) to (a3) individually or commonly for the plurality of PUSCH transmission occasions.

The base station apparatus 20 transmits DCI including information indicating row index m to the terminal apparatus 10. Row index m may be indicated by a value set in a TDRA field of the DCI. The size of the TDRA field may be determined based on the number of entries of the second table, for example. For example, in a case where the format of the DCI is DCI format 0_1 and/or DCI format 0_2, the size of the TDRA field may be determined based on the number of entries of the second table. In the example in Fig. 12, since the number of entries of the second table is 15, the size of the TDRA field may be 4 bits. In a case where the terminal apparatus 10 has received the DCI including the information indicating row index m from the base station apparatus 20, the terminal apparatus 10 may refer to row index m + 1 in the second table. The terminal apparatus 10 may use parameters (a1) to (a3) associated with row index m + 1 in the second table, to determine a resource(s) for uplink transmission.

For example, the base station apparatus 20 transmits DCI including information set at a value indicating a row index "9" to the terminal apparatus 10. The terminal apparatus 10 refers to the row having a row index of " 10" in the second table illustrated in Fig. 12. This row is associated with four parameter sets. Hence, the terminal apparatus 10 determines (decides) that four PUSCH transmission occasions are scheduled. The terminal apparatus 10 uses the four parameter sets associated with the row index "10, to determine a resource(s) for uplink transmission.

1.6. UCI Transmission

The terminal apparatus 10 may transmit UCI on a PUSCH scheduled by CG (i.e., a CG PUSCH).

As a 5G specification using an unlicensed spectrum channel, NR-unlicensed (NR-U) is introduced. Note that an unlicensed spectrum channel may be interpreted as a shared spectrum channel.

In NR-U, UCI transmitted on a PUSCH scheduled by CG is also referred to as "CG-UCI". CG-UCI may include a specific field. For example, it is assumed that a higher layer (i.e., RRC layer) parameter cg-RetransmissionTimer is configured. In this case, CG-UCI may include one of, or a combination of two or more of the following fields (c1) to (c4).

(c1) HARQ process number
(c2) Redundancy version (RV)
(c3) New data indicator (NDI)
(c4) Channel occupancy time (COT) sharing information

Note that a higher layer parameter cg-UCI-Multiplexing is configured, CG-UCI may include a field of (c5) below in addition to (c1) to (c4).
(c5) HARQ-Ack bit

## 1.7. Extended Reality (eXtended Reality, XR)

Characteristics of traffic generated in XR will be described. In XR, a plurality of types of data (video data, voice data, user data, control data, and the like) are transmitted and received in parallel. A plurality of data streams corresponding to the data segments have different traffic characteristics and quality of service (QoS) requirements.

At timings of transmission and reception of the data, time shifts expressed as jitter, variability, and fluctuation may occur due to factors such as encoding of a video and audio and network latency.

Reference Literature 1 describes that the following definitions can be introduced for transmission and reception in XR.

[Reference Literature 1] 3GPP TR 23.700-60 V1.1.0 (2022-09)

PDU set: a set of PDUs including one or more PDUs carrying a payload of one unit of information generated at an application level. The application level corresponds, for example, to a frame or a video slice in an XR service.

Data burst: a set of datamultiple PDUs generated and sent by an application in a short period of time.

Furthermore, for XR, requirements of a packet delay budget (PDB) as the QoS requirements have been studied. The PDB is an upper bound of packet delay time allowed between the terminal apparatus 10 and the UPF. Note that Reference Literature 1 also describes that the following new QoS parameters can be introduced.

PDU-set delay budget (PSDB): an upper bound of PDU-set delay time allowed between the terminal apparatus 10 and the UPF.

PDU-set error rate (PSER): an upper bound of an error rate calculated between a PDU set processed by a sender, and all the PDUs in a PDU set that has not successfully delivered to an upper layer of a corresponding receiver.

## 1.8. CG Enhancement

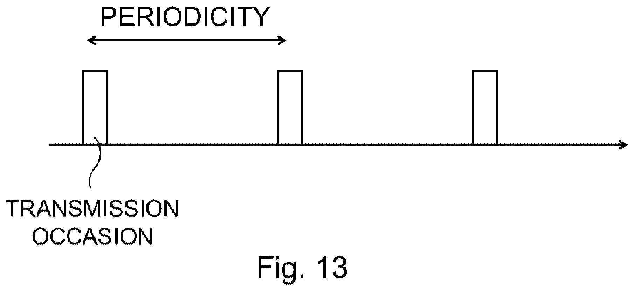

It is assumed that XR is operated under the various requirements described above. With this, use of scheduling by CG instead of scheduling by DG is studied for uplink transmission from a terminal apparatus. As illustrated in Fig. 13, in an existing configuration, one transmission occasion is configured in a single period of CG. The period corresponds to periodicity with a CG parameter (i.e., a parameter related to CG) described above. As described above, the base station apparatus 20 may include and transmit a CG parameter including information indicating periodicity and/or an offset in an RRC message, to configure the periodicity and/or the offset for CG PUSCH transmission. Th terminal apparatus 10 may perform periodic CG PUSCH transmission according to the information for indicating the periodicity and/or the offset included in the RRC message. Here, one transmission occasion may include a transmission occasion corresponding to transmission of one transport block. A plurality of transmission occasions may include transmission occasion(s) corresponding to transmission(s) of one or a plurality of transport blocks.

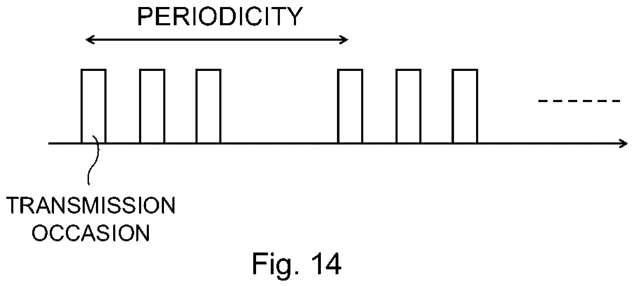

The configuration in Fig. 13 has the possibility of not satisfying the XR requirements. In view of this, in the present embodiment, as illustrated in Fig. 14, a plurality of transmission occasions are configured in a single period for PUSCH. In the example in Fig. 14, the number Nt of transmission occasions included in one period is three (Nt = 3).

In such a configuration, the terminal apparatus 10 may not use at least one of a plurality of transmission occasions (for example, a plurality of transmission occasions included in one period) for uplink transmission. Such a transmission occasion not used will be referred to as an "unused occasion" or an "unused transmission occasion" below.

The terminal apparatus 10 transmits, to the base station apparatus 20, information related to an unused occasion(s) of the plurality of transmissions. Note that information related to such an unused occasion is referred to as "dynamic indication of an unused occasion" in some cases.

For example, the terminal apparatus 10 transmits UCI including information related to an unused occasion(s) to the base station apparatus 20. The UCI including information related to an unused occasion(s) may be referred to as unused transmission occasion-uplink control information (UTO-UCI). The terminal apparatus 10 may transmit the UCI by using at least one (i.e., a CG PUSCH) of a plurality of transmission occasions configured by CG. Alternatively, the terminal apparatus 10 may transmit the UCI by using a resource other than a CG PUSCH (for example, a resource of a PUCCH). Such a configuration requires the terminal apparatus 10 and/or the base station apparatus 20 of a procedure for determining the size (i.e., the number of bits or the bit width) of the information related to an unused occasion(s).

In the present embodiment, the terminal apparatus 10 receives configuration information related to a plurality of transmission occasions included in one period in CG. The "configuration information related to a plurality of transmission occasions included in one period in CG" is referred to simply as "configuration information" to simplify expression, below.

Configuration information may be configured for one or each of a plurality of serving cells. In another example, configuration information may be configured for one or each of a plurality of UL-BWPs. Configuration information may be configured for one or each of a plurality of CGs (i.e., CG configurations). For example, configuration information may be configured for one or each of a plurality of Type 1 CG configurations. Configuration information may be configured for one or each of a plurality of Type 2 CG configurations. For example, the base station apparatus 20 may transmit an RRC message including configuration information. The terminal apparatus 10 may receive the configuration information included in the RRC message. For example, the base station apparatus 20 may transmit an RRC message including information for determining the number of bits of information related to an unused occasion(s) (which may be information indicating the number of bits of the information related to an unused occasion(s), for example). The terminal apparatus 10 may determine the number of bits of the information related to an unused occasion(s), based on the information for determining the number of bits of the information related to an unused occasion(s) included in the RRC message. For example, the number of bits of the information related to an unused occasion(s) may be the number of bits of information related to an unused occasion(s) in one period. As will be described below, the number of bits of the information related to an unused occasion(s) may be the number of bits of the information related to unused occasions in a plurality of periods.

The terminal apparatus 10 determines the size (i.e., the number of bits or the bit width) of the information related to an unused occasion(s) by using configuration information. Similarly, the base station apparatus 20 determines (or configures) the size of the information related to an unused occasion(s) by using configuration information. In other words, configuration information may be used to determine (or configure) the size of the information related to an unused occasion(s).

First to fourth aspects will be described below as aspects of processing for determining the size of information related to an unused occasion(s).

(1) First Aspect

Configuration information may include table information for configuring a table related to resources for a plurality of transmission occasions included in one period in CG and/or indication information indicating an index (or a value) for referring to the table.

In the following, the table is referred to as a "third table". The third table may be a TDRA table. The table information is referred to as "third table information". In the third table, one index (or value) is associated with one or a plurality of PUSCH transmission occasions.

Specifically, in the third table, one index is associated with one or more parameters. The parameter(s) is a parameter(s) related to a resource of each transmission occasion and may include one of, or a combination of two or more of the following (d1) to (d7), for example.

(d1) Information related to a slot in which uplink transmission (i.e., PUSCH transmission) is performed. Specifically, (d1) may be an offset between a slot in which an RRC message or DCI is received and a slot in which the PUSCH transmission is to be performed. Here, an "RRC message or DCI is received" may include an "uplink grant is considered to have occurred". "Uplink transmission (i.e., PUSCH transmission) is performed" may include an uplink transmission occasion. In other words, the offset indicated by k2 may include an offset between a slot in which an RRC message or DCI is received and a PUSCH transmission occasion. For example, (d1) may be k2 in (a1) above.

(d2) Start symbol of uplink transmission (i.e., PUSCH transmission). The start symbol of uplink transmission (i.e., PUSCH transmission) may include the start symbol of an uplink transmission occasion (i.e., a PUSCH transmission occasion). Specifically, (d2) may be the start symbol position S in (a2) above.

(d3) Length from the start symbol. The length from the start symbol may include the length of an uplink transmission occasion (i.e., a PUSCH transmission occasion) from the start symbol. Specifically, (d2) may be the symbol length L in (a2) above. Note that an SLIV may be used as a combination of (d2) and (d3).

(d4) Mapping type of uplink transmission (i.e., PUSCH transmission). Specifically, (d4) may be the mapping type in (a3) above. Specifically, the mapping type may include Type A and Type B.

(d5) Redundancy version (RV). The number of a redundancy version corresponding to UL-SCH information (uplink data, uplink transmission occasion, or PUSCH transmission) is indicated. For example, in a case where a redundancy version number is configured, one given transport block may be repeatedly transmitted in one or a plurality of PUSCH transmission occasions according to the redundancy version number.

(d6) Information related to an offset (or a gap) between a plurality of uplink transmissions (i.e., a plurality of PUSCH transmissions). The information may include the length (or period) between the plurality of uplink transmissions. The information may include an offset (gap, length, or period) between a plurality of uplink transmission occasions (i.e., PUSCH transmission occasions). For example, the offset may be indicated by the number of slots and/or the number of symbols. Specifically, in a case where three PUSCH transmission occasions (first transmission occasion, second transmission occasion, and third transmission occasion) are configured in one given period in CG, the value of an offset between the first transmission occasion and the second transmission occasion and/or the value of an offset between the second transmission occasion and the third transmission occasion may be indicated. For example, one given offset value may be configured, and the offset value may be used commonly as the offset between the first transmission occasion and the second transmission occasion and the offset between the second transmission occasion and the third transmission occasion. In a case where no offset is configured, the terminal apparatus 10 may perform uplink transmission (i.e., PUSCH transmission) in a plurality of consecutive PUSCH transmission occasions.

(d7) Information related to an offset for determining a slot and/or a symbol position of one or each of a plurality of uplink transmission occasions. The information may include an offset for determining the position of each of a plurality of uplink transmissions (i.e., PUSCH transmissions). The offset may be fifth information (for example, timeDomainOffset) to be described below. For example, the offset may be a parameter to be used for a certain mathematical expression for determining a slot and/or a symbol position of one or each of a plurality of uplink transmission occasions.

Similarly, the third table information may include one of, or a combination of two or more of parameters (d1) to (d7). The terminal apparatus 10 configures the third table by using the third table information. For example, in a case where the third table information is included in an RRC message, the terminal apparatus 10 may perform PUSCH transmission, based on the third table information. In other words, in a case where the third table information is included in the RRC message, the terminal apparatus 10 may perform PUSCH transmission in one or a plurality of PUSCH transmission occasions in one CG period. In other words, in a case where the third table information is included in the RRC message, the terminal apparatus 10 may transmit one or a plurality of transport blocks in one CG period. Here, in a case where the third table information is not included in the RRC message, the terminal apparatus 10 may perform PUSCH transmission in one transmission occasion in one CG period. In other words, in a case where the third table information is not included in the RRC message, the terminal apparatus 10 may transmit one transport block in one CG period.

The terminal apparatus 10 may perform PUSCH transmission, based on the third table information included in each of a plurality of CG configurations. Here, in a case where a plurality of PUSCH transmissions collide, the terminal apparatus 10 may perform any one of the PUSCH transmissions. In other words, in a case where a plurality of PUSCH transmissions collide, the terminal apparatus 10 may perform transmission of any one transport block. Here, "a case where a plurality of PUSCH transmissions collide" may include a case where a plurality of PUSCH transmissions occur in the same time-domain resource (for example, slot and/or symbol). "a case where a plurality of PUSCH transmissions collide" may include a case where a plurality of PUSCH transmission occasions are configured in the same time-domain resource (for example, slot and/or symbol).

For example, in a case where a plurality of PUSCH transmissions collide, the terminal apparatus 10 may determine a PUSCH transmission to be performed (or a transmission occasion to be used for PUSCH transmission), based on information indicating an index included in a CG configuration (i.e., the index of the CG configuration). For example, assume that a first CG configuration (i.e., a first CG parameter) including an index "0" is used to configure one or a plurality of first PUSCH transmissions (or first PUSCH transmission occasions), and a second CG configuration (i.e., a second CG parameter) including an index "1" is used to configure one or a plurality of second PUSCH transmissions (or second PUSCH transmission occasions). In a case where the first PUSCH transmission(s) and the second PUSCH transmission(s) collide, the terminal apparatus 10 may perform the one or plurality of PUSCH transmissions, based on the first CG configuration including the index "0". In other words, in a case where a plurality of PUSCH transmissions collide, the terminal apparatus 10 may perform one or a plurality of PUSCH transmissions according to a parameter included in a CG configuration with the smallest (or largest) index value.

For example, the base station apparatus 20 may transmit an RRC message including information indicating priority of CG configurations. For example, the information indicating priority of CG configurations may be configured for each CG configuration (or may be included in each CG configuration). In a case where a plurality of PUSCH transmissions collide, the terminal apparatus 10 may perform one or a plurality of PUSCH transmissions, based on the priority of CG configurations. For example, in a case where a plurality of PUSCH transmissions collide, the terminal apparatus 10 may perform one or a plurality of PUSCH transmissions according to a parameter included in a CG configuration with the highest (or lowest) priority of CG configurations.

The terminal apparatus 10 may transmit information indicating a redundancy version number corresponding to UL-SCH information transmitted in a PUSCH. Specifically, for example, in a case where the terminal apparatus 10 has UL-SCH information (the UL-SCH information is present) for the first transmission occasion, the terminal apparatus 10 may include (map or multiplex) information indicating a redundancy version number "0" in the PUSCH resource in the first transmission occasion. In a case where the terminal apparatus 10 does not have UL-SCH information (the UL-SCH information is absent) for the first transmission occasion and has UL-SCH information for the second transmission occasion, the terminal apparatus 10 may include information indicating a redundancy version number "0" in the PUSCH resource in the second transmission occasion.

Note that the third table information may be configured for each cell, each UL-BWP, each UE, and/or each DCI format. In other words, a plurality of third tables (i.e., a plurality of third table information segments) may be configured. Note that a default table may be used as the third table.

A table to be actually used (or selected) may be determined from among a plurality of third tables, based on (e1) to (e4) below. In other words, the third table information may be configured for each DCI format to be used for scheduling of a PUSCH (for example, DCI format 0_0, DCI format 0_1, and/or DCI format 0_2). In other words, the terminal apparatus may determine corresponding third table information (for example, parameter for TDRA), based on a DCI format used for scheduling (and/or activation) of PUSCH transmission.

    (e1) DCI format
    (e2) RNTI
    (e3) PDCCH search space
    (e4) Information of whether or not a third table is configured for each cell, each UL-BWP, each UE, and/or each DCI format.

At least one of the parameters included in the third table is configured individually for each of a plurality of transmission occasions included in one period. For example, an index received as indication information may be associated with a plurality of parameters (or a plurality of parameter sets) corresponding to a plurality of respective transmission occasions. Here, the number of parameters associated with the index corresponds to the number Nt of transmission occasions. Hence, the terminal apparatus 10 determines the size of information related to an unused occasion(s), based on the number of parameters (or the number of parameter sets) associated with the index. For example, the terminal apparatus 10 may determine the size of the information related to an unused occasion(s), based on the number of parameters of one of, or a combination of two or more of (d1) to (d7) above. In other words, the terminal apparatus 10 may determine the size of the information related to an unused occasion(s), based on the number of entries of one of, or a combination of two or more of parameters (d1) to (d7) above (i.e., the number of parameters included in (or entered to) the third table information).

Here, the size of the information related to an unused occasion(s) may be determined based on the number Nt of transmission occasions and the number Np of periods (i.e., CG periods). In other words, the information related to an unused occasion(s) may be used for PUSCH transmission occasions in a plurality of periods. For example, the base station apparatus 20 may transmit an RRC message including information indicating the number Np of periods for determining the size of the information related to an unused occasion(s). For example, the terminal apparatus 10 may multiply the number Nt of transmission occasions and the number Np of periods together to thereby determine the size of the information related to an unused occasion(s). Specifically, for example, in a case where "3" is indicated as the number Nt of transmission occasions and "2" is indicated as the number Np of periods, information related to the unused occasion(s) of 6 bits (i.e., the number of bits obtained as a multiplication value of the number Nt of transmission occasions being "3" and the number Nt of periods being "2") may be used.

As described above, the base station apparatus 20 may transmit an RRC message including one or a plurality of parameters (for example, one or a plurality of parameters included in the third table information) to configure one or a plurality of transmission occasions in one period for the terminal apparatus 10. In a case where one or a plurality of parameters (for example, one or a plurality of parameters included in the third table information) are included in the RRC message, the terminal apparatus 10 may perform PUSCH transmission in one or a plurality of PUSCH transmission occasions in one period.

Here, the base station apparatus 20 may include and transmit information to be used for indicating transmission of the information related to an unused occasion(s) in the RRC message. In other words, the base station apparatus 20 may individually configure the PUSCH transmission in one or a plurality of transmission occasions and transmission of the information related to an unused occasion(s). In a case where information to be used for indicating transmission of the information related to an unused occasion(s) is included in the RRC message, the terminal apparatus 10 may transmit the information related to an unused occasion(s) (for example, may include (map or multiplex) the information related to an unused occasion(s) in a PUSCH resource). For example, in a case where one or a plurality of parameters (for example, one or a plurality of parameters included in the third table information) and the information to be used for indicating transmission of the information related to an unused occasion(s) are included in the RRC message, the terminal apparatus 10 may transmit the information related to the unused occasion(s).

The information related to an unused occasion(s) may be represented as a sequence. The information may be represented as a bit string (for example, a bitmap). In other words, a sequence may be interpreted as a bit string. For example, information may be represented as a bit string, and the bits of the bit string may correspond to a plurality of respective transmission occasions, to be used as information (i.e., dynamic indication) related to an unused occasion(s). Details of the sequence will be described below.

Note that the base station apparatus 20 determines the size of the information related to an unused occasion(s), based on configuration information (i.e., the third table information and the indication information) in a manner similar to that described above.

A concrete procedure of a case of each of CG Type 1 and Type 2 will be described below. Note that, as in the example in Fig. 14, it is assumed that three transmission occasions are configured in one period.

- Type 1

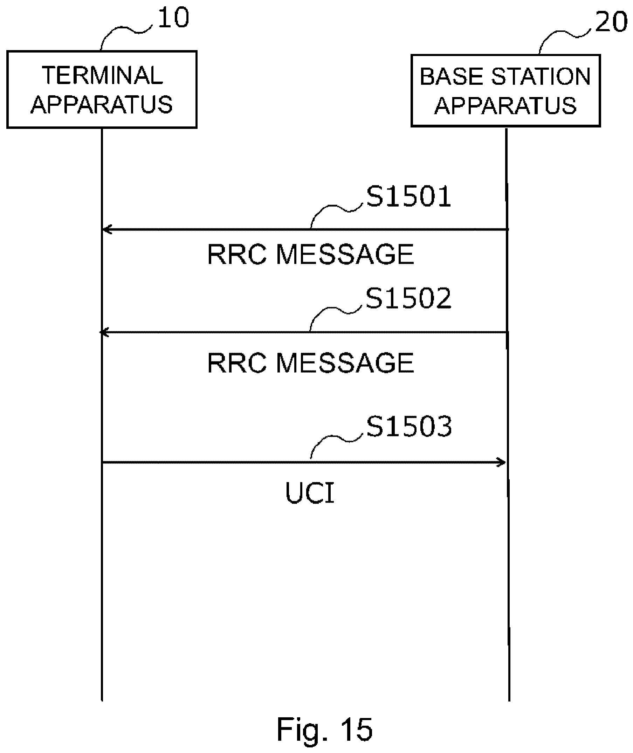

As illustrated in Fig. 15, the communicator 220 of the base station apparatus 20 transmits an RRC message including a parameter related to a PUSCH to the terminal apparatus 10 (S1501). The parameter related to a PUSCH includes third table information. The parameter related to a PUSCH may be a PUSCH-Config IE. The third table information may be included in PUSCH-Config IE. Note that the third table information may be included in an IE other than a PUSCH-Config IE. A parameter related to CG including the third table information may be included in the parameter related to a PUSCH.

The communicator 220 transmits an RRC message including the parameter related to CG to the terminal apparatus 10 (S1502). The parameter related to CG includes information indicating row index m for referring to the third table. The parameter related to CG may be a ConfiguredGrantConfig IE. The information indicating row index m may be included in the ConfiguredGrantConfig IE. Note that the information indicating row index m may be included in an IE other than the ConfiguredGrantConfig IE. Note that the size of the information (IE) (i.e., the number of bits or the bit width) indicating row index m may be determined based on the number of entries of the third table, for example. In other words, the size of the information indicating row index m may be determined based on the number of parameters (or parameter sets) in the third table (i.e., the number of parameters included in (entered to) the third table). The third table information may be configured individually or commonly for one or each of a plurality of CG configurations (for example, a Type 1 CG configuration and/or a Type 2 CG configuration).

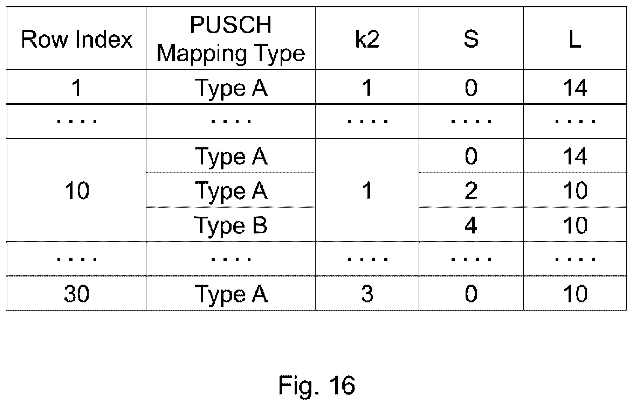

The controller 110 of the terminal apparatus 10 configures the third table, based on the third table information. The terminal apparatus 10 may perform PUSCH transmission (i.e., Type 1 CG PUSCH transmission), based on the third table information. The third table information includes one of, or a combination of two or more of parameters (d1) to (d7). The controller 110 configures the third table illustrated in Fig. 16. In the third table, one row index is associated with one or a plurality of transmission occasions. For example, a row index "1" is associated with a parameter set corresponding to one transmission occasion included in one period. A row index "10" is associated with three parameter sets corresponding to three transmission occasions included in one period. Note that, in the example in Fig. 16, parameter (d1) (i.e., k2) is configured commonly for the three transmission occasions.

Assume that the terminal apparatus 10 has received an RRC message including information indicating row index m (= 9). The controller 110 refers to row index m + 1 in the third table. The controller 110 acquires the three parameter sets corresponding to the three transmission occasions associated with the row index "10" in the third table. The controller 110 uses the three parameter sets to determine a resource for each uplink transmission.

The controller 110 may determine the size of information related to an unused occasion(s), based on the number of enabled (available) parameters associated with the row index "10". In this example, the number of parameters (d2) associated with the row index "10" is three. The controller 110 may determine (decide) that the number Nt of transmission occasions is "3", based on the number of parameters (d2) associated with the row index "10". The controller 110 may determine the size of the information related to an unused occasion(s), based on the number Nt of transmission occasions. Note that the controller 110 may determine the size of information related to an unused occasion(s), based on the number of other parameters (for example (d3) or (d4)) associated with the row index "10". In a case where the third table includes parameter (d5) and/or (d6) and/or (d7), the controller 110 may determine the size of the information related to an unused occasion(s), based on the number of parameters (d5), and/or (d6), and/or (d7).

For example, the controller 110 configures the size of a field of the information related to an unused occasion(s) included in UCI, at 3 bits. In other words, the controller 110 generates the information related to an unused occasion(s) of a size of 3 bits. In other words, the controller 110 may determine the size of the information related to an unused occasion(s) to be the same number as the number Nt of transmission occasions. Here, the controller 110 may determine the size of the information related to an unused occasion(s) to be the same number as the number Nt of transmission occasions - 1. As described above, the information related to an unused occasion(s) is transmitted in an uplink transmission occasion. Hence, the uplink transmission occasion to be used for transmission of the information related to an unused occasion(s) may be excluded from the size of the information related to an unused occasion(s). For example, the controller 110 may identify the number Nt of transmission occasions and determine the number obtained by subtracting 1 from the number Nt of transmission occasions (for example, the number obtained by subtracting uplink transmission occasions to be used for transmission of the information related to an unused occasion(s)), to be the size of the information related to an unused occasion(s). As described above, the controller 110 may determine the size of the information related to an unused occasion(s), based on a multiplication value of the number Nt of transmission occasions - 1 and the number Np of periods. The communicator 120 transmits UCI including the field to the base station apparatus 20 (S1503).

Note that the controller 210 of the base station apparatus 20 determines the size of the information related to an unused occasion(s), based on the third table information and the information indicating row index m. In other words, the controller 210 determines the size of a field of the information related to an unused occasion(s) included in UCI, to be 3 bits. As described above, the controller 210 can recognize the size of a field of the information related to an unused occasion(s) included in UCI, before receiving the UCI from the terminal apparatus 10.

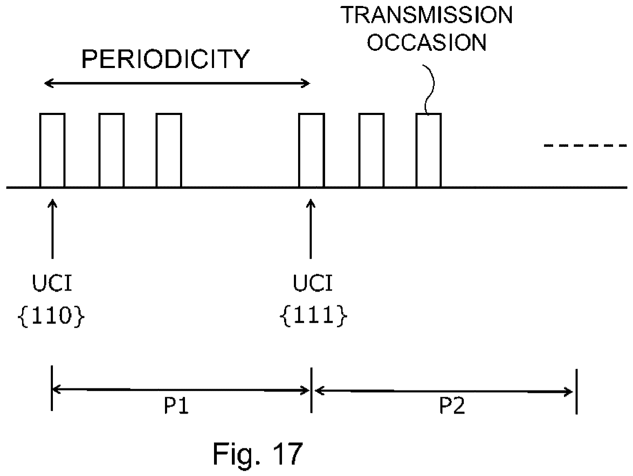

UCI transmission will be described concretely below. The example in Fig. 17 includes a first period P1 and a second period P2. Three transmission occasions are configured for each of the first period P1 and the second period P2. The controller 110 determines to use the first transmission occasion and the second transmission occasion for uplink transmission in the first period P1. The controller 110 generates a 3-bit sequence {110}. The first to third values of the sequence correspond to the first to third transmission occasions, respectively. In other words, bits of information related to an unused occasion(s) in an ascending order may correspond to uplink transmission occasions in an ascending order. A value "0" may indicate that a corresponding transmission occasion is not used for uplink transmission. A value "1" may indicate that a corresponding transmission occasion is used for uplink transmission. The communicator 120 may transmit UCI including the sequence to the base station apparatus 20 in the first transmission occasion in the first period P1. In other words, the information related to an unused occasion(s) in one given period may indicate use and/or non-use for the transmission occasion(s) in the one given period. For example, the terminal apparatus 10 may indicate, by transmitting the information related to an unused occasion(s) in one given period, use and/or non-use for the transmission occasion(s) in the one given period.

Here, information related to an unused occasion(s) may indicate use and/or non-use for the transmission occasion(s) in one given period after transmission of the information related to an unused occasion(s). For example, the terminal apparatus 10 may indicate, by transmitting the information related to an unused occasion(s), use and/or non-use for the transmission occasion(s) in one period after the transmission of the information related to an unused occasion(s). For example, the terminal apparatus 10 may indicate by transmitting the information related to an unused occasion(s) in one given period, use and/or non-use for a transmission occasion(s) in one period subsequent to the one given period.

For example, in a case where indication of transmission of the information related to an unused occasion(s) is configured, the terminal apparatus 10 may always transmit the information related to an unused occasion(s) (for example, bit(s) of the information related to an unused occasion(s)) in the first transmission occasion in one period. For example, the terminal apparatus 10 may determine the number of modulation symbols (also referred to as coded modulation symbols) for the bit(s) of the information related to an unused occasion(s). The terminal apparatus 10 may determine the number of modulation symbols for bits of UL-SCH information (i.e., uplink data). For example, the terminal apparatus 10 may combine the modulation symbols for the bit(s) of the information related to an unused occasion(s) and the modulation symbols for the bit(s) of the UL-SCH information to thereby transmit both the information related to an unused occasion(s) and the UL-SCH information on a PUSCH in the first transmission occasion. Here, in the combining of the modulation symbols, combining is performed such that the information related to an unused occasion(s) may be arranged first, and the modulation symbols for the bit(s) of the UL-SCH information may be arranged subsequent thereto. In this way, in a case where the modulation symbols for information after the combining are mapped to the resource of a scheduled PUSCH, dropping of the modulation symbols for the bit(s) of the information related to an unused occasion(s) can be avoided.

In a case where the terminal apparatus 10 does not have UL-SCH information (i.e., UL-SCH information is absent), the terminal apparatus 10 may transmit information related to an unused occasion(s) without UL-SCH information. For example, in a case where the terminal apparatus 10 does not have UL-SCH information, the terminal apparatus 10 may use the resource of a PUSCH in the first transmission occasion to transmit information related to an unused occasion(s) without UL-SCH information. In other words, in a case where the terminal apparatus 10 has UL-SCH information (i.e., the UL-SCH information is absent), the terminal apparatus 10 may transmit both information related to an unused occasion(s) and the UL-SCH information; in a case where the terminal apparatus 10 does not have UL-SCH information, the terminal apparatus 10 may transmit information related to an unused occasion(s) without UL-SCH information. For example, in a case where indication of transmission of information related to an unused occasion(s) is configured, a field for the information related to an unused occasion(s) may always be secured in the resource of a PUSCH in the first transmission occasion. In a case where the terminal apparatus 10 does not have UL-SCH information, the terminal apparatus 10 may not transmit information related to an unused occasion(s). For example, in a case where the terminal apparatus 10 does not have UL-SCH information, the terminal apparatus 10 may skip (or drop) transmission of information related to an unused occasion(s) in the first transmission occasion.

In a case where the terminal apparatus 10 has UL-SCH information, the terminal apparatus 10 may transmit information related to an unused occasion(s). For example, the terminal apparatus 10 may transmit the information related to an unused occasion(s) always together with the UL-SCH information. For example, in a case where the terminal apparatus 10 does not have UL-SCH information in the first transmission occasion while having UL-SCH information in the second transmission occasion, the terminal apparatus 10 may transmit both the information related to an unused occasion(s) and the UL-SCH information in the second transmission occasion.

Information related to an unused occasion(s) may be transmitted together with UL-SCH information corresponding to a redundancy version number "0". For example, only in a case where a redundancy version number corresponding to UL-SCH information to be transmitted is "0", the terminal apparatus 10 may transmit information related to an unused occasion(s). For example, in a case where the terminal apparatus 10 does not have UL-SCH information in the first transmission occasion while having UL-SCH information in the second transmission occasion, the terminal apparatus 10 may transmit UL-SCH information corresponding to a redundancy version number "0" in the second transmission occasion. For example, information related to an unused occasion(s) may be transmitted together with UL-SCH information corresponding to a redundancy version number "0" to be transmitted in the second transmission occasion.

The terminal apparatus 10 may transmit information indicating transmission of information related to an unused occasion(s) (or inclusion (or mapping or multiplexing) of the information related to an unused occasion(s) in a PUSCH). The information indicating transmission of information related to an unused occasion(s) may include information indicating existence of the information related to an unused occasion(s) in a PUSCH. The terminal apparatus 10 may combine the bit(s) of information indicating transmission of information related to an unused occasion(s) and the bit(s) of information related to an unused occasion(s) and determine the number of modulation symbols for the combined information bits. For example, in the combining of the information bits, combining is performed such that the information indicating transmission of information related to an unused occasion(s) may be arranged first, and the information related to an unused occasion(s) may be arranged subsequent thereto. The base station apparatus 20 identifies the information indicating transmission of information related to an unused occasion(s) first, which enables the base station apparatus 20 to identify that the information related to an unused occasion(s) is included in a PUSCH resource and thereby decode the subsequent information related to an unused occasion(s). As described above, the terminal apparatus 10 may transmit information indicating a redundancy version number (for example, information indicating a redundancy version number "0"). For example, the terminal apparatus 10 may combine the bit(s) of information indicating a redundancy version number and the bit(s) of information related to an unused occasion(s), and determine the number of modulation symbols for the combined information bits. For example, in the combining of the information bits, combining is performed such that the bit(s) of the information indicating transmission of information indicating a redundancy version number may be arranged first, and the bit(s) of the information related to an unused occasion(s) may be arranged subsequent thereto. The base station apparatus 20 identifies the information indicating a redundancy version number (for example, information indicating a redundancy version number "0") first, which enables the base station apparatus 20 to identify that the information related to an unused occasion(s) is included in a PUSCH resource and thereby decode the subsequent information related to an unused occasion(s).

Here, a transmission occasion being used for uplink transmission may be interpreted as a "transmission occasion may be used for uplink transmission", a "transmission occasion may be used by the terminal apparatus 10", and/or a "transmission occasion being a valid uplink resource". A transmission occasion being used for uplink transmission may be interpreted as "having a transmission occasion for uplink transmission (i.e., PUSCH transmission) (and/or a valid uplink resource)" and/or an "uplink grant being considered to have occurred". A transmission occasion not being used for uplink transmission may be interpreted as a "transmission occasion may not be used for uplink transmission", a "transmission occasion may not be used by the terminal apparatus 10" and/or a "transmission occasion being an invalid (i.e., not valid) uplink resource". A transmission occasion not being used for uplink transmission may be interpreted as "not having a transmission occasion for uplink transmission (i.e., PUSCH transmission) (for example, an uplink resource being released, discarded, or ignored)", and/or an "uplink grant not being considered to have occurred (i.e., an uplink grant being considered not to occur)". In the example, a value "0" corresponds to a value indicating a transmission occasion not being used for uplink transmission, and a value "1" corresponds to a value indicating a transmission occasion being used for uplink transmission. However, this example is not restrictive. A value "1" may correspond to a value indicating a transmission occasion not being used for uplink transmission, and a value "0" may correspond to a value indicating a transmission occasion being used for uplink transmission.

As described above, for example, the terminal apparatus 10 may store an RRC message and/or DCI from the base station apparatus 20, as a configured uplink grant in the MAC layer (i.e., the MAC layer in the terminal apparatus 10) and consider that the uplink grant sequentially occurs, to perform PUSCH transmission. The terminal apparatus 10 may include UCI including information related to an unused occasion(s), in a PUSCH in the physical layer (i.e., the physical layer in the terminal apparatus 10) (or map or multiplex the UCI related to an unused occasion(s) to the PUSCH). In other words, the MAC layer in the terminal apparatus 10 may provide information related to processing of an uplink grant to the physical layer in the terminal apparatus 10. For example, the MAC layer may provide information indicating that an uplink grant is considered to occur (and/or indicating that an uplink grant is not considered to occur) to the physical layer. For example, the MAC layer may provide information indicating that an uplink grant is considered to occur (and/or indicating that an uplink grant is not considered to occur) to the physical layer, based on the start and/or end of one period of CG. The MAC layer in the terminal apparatus 10 may provide information related to UL-SCH information to the physical layer in the terminal apparatus 10. For example, the MAC layer may provide information indicating having UL-SCH information (or that UL-SCH information is present or has occurred) and/or information indicating not having UL-SCH information (or that UL-SCH information is absent or has not occurred) to the physical layer. For example, the MAC layer may provide information related to UL-SCH information to the physical layer, based on the start and/or end of one period of CG. In other words, a transmission occasion being used (or not being used) for uplink transmission may be determined in the MAC layer in the terminal apparatus 10. The physical layer in the terminal apparatus 10 may provide information indicating that a transmission occasion is used (or not used) for uplink transmission, to the MAC layer. For example, the physical layer may provide information related to an unused occasion(s) to the MAC layer. For example, the physical layer may provide information indicating that a transmission occasion is used (or not used) for uplink transmission, to the MAC layer, based on the start and/or end of one period of CG. In other words, a transmission occasion being used (or not being used) for uplink transmission may be determined in the physical layer in the terminal apparatus 10.

Similarly, the controller 110 determines to use all of the first transmission occasion to the third transmission occasion in the second period P2, for uplink transmission. The controller 110 generates a 3-bit sequence {111}. The communicator 120 may transmit UCI including the sequence to the base station apparatus 20 in the first transmission occasion in the second period P2.

Note that, in Type 1, the third table information may be included in a parameter related to CG. In other words, the third table information may be included in an RRC message in step S1502. The third table information may be included in a ConfiguredGrantConfig IE.

- Type 2

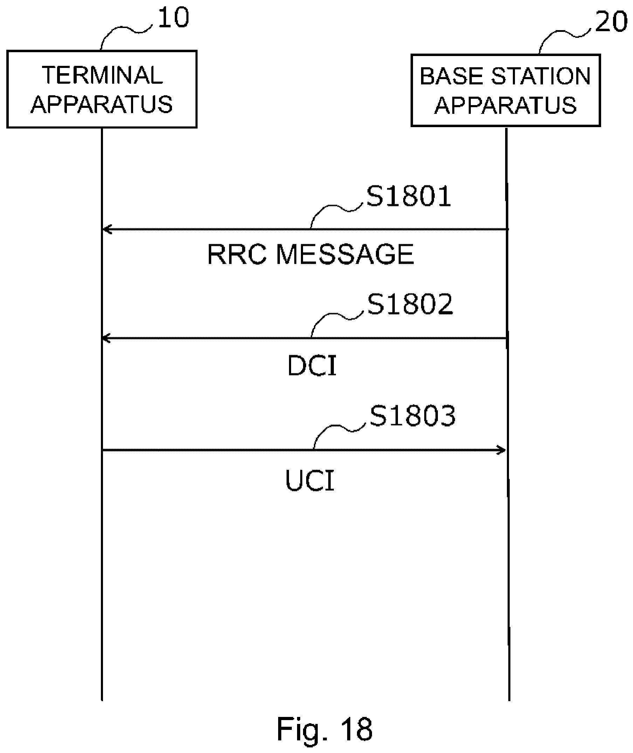

For Type 2, operation similar to the contents described in the description of Type 1 may be employed. As illustrated in Fig. 18, the communicator 220 of the base station apparatus 20 transmits an RRC message including a parameter related to a PUSCH to the terminal apparatus 10 (S1801). The parameter related to a PUSCH includes third table information. The parameter related to a PUSCH may be a PUSCH-Config IE. The third table information may be included in PUSCH-Config IE. Note that the third table information may be included in an IE other than a PUSCH-Config IE. The third table information may be included in a parameter related to CG. For example, the third table information may be included in a ConfiguredGrantConfig IE.

The controller 110 of the terminal apparatus 10 configures the third table, based on the third table information. The terminal apparatus 10 may perform PUSCH transmission (i.e., Type 2 CG PUSCH transmission), based on the third table information. The third table information may include one of, or a combination of two or more of parameters (d1) to (d7). The controller 110 configures the third table illustrated in Fig. 16.

The communicator 220 of the base station apparatus 20 transmits DCI with CRC scrambled with a CS-RNTI being attached, to the terminal apparatus 10 (S1802). Through this, a periodic transmission operation by the terminal apparatus 10 using a PUSCH is activated. Further, the DCI includes information indicating row index m for referring to the third table. The information indicating row index m may be included in a TDRA field of DCI. The size (i.e., the number of bits or the bit width) of the TDRA field may be determined based on the number of entries of the third table (i.e., the number of parameters (parameter sets) included in (or entered to) the third table information), for example.

Assume that "9" is indicated by the information indicating row index m for referring to the third table. The controller 110 refers to row index m + 1 in the third table. The controller 110 acquires the three parameter sets corresponding to the three transmission occasions associated with the row index "10" in the third table. The controller 110 uses the three parameter sets to determine a resource for each uplink transmission.

Similarly to a case of Type 1 described above, the controller 110 determines the size of information related to an unused occasion(s), based on the number of parameters associated with a row index "10". Specifically, the controller 110 determines (decides) that the number Nt of transmission occasions is "3", based on the number of parameters associated with the row index "10". The controller 110 determines the size of the information related to an unused occasion(s), based on the number Nt of transmission occasions. The controller 110 may determine the size of the information related to an unused occasion(s), based on the number Nt of transmission occasions - 1. The controller 110 may determine the size of the information related to an unused occasion(s), based on a multiplication value of the number Nt of transmission occasions and the number Np of periods. The controller 110 may determine the size of the information related to an unused occasion(s), based on a multiplication value of the number Nt of transmission occasions - 1 and the number Np of periods.

For example, the controller 110 configures the size of a field of the information related to an unused occasion(s) included in UCI, at 3 bits. In other words, the controller 110 generates the information related to an unused occasion(s) of a size of 3 bits. The communicator 120 transmits UCI including the field to the base station apparatus 20 (S1803). Note that, as illustrated in Fig. 17, the communicator 120 may transmit UCI to the base station apparatus 20.

Note that the controller 210 of the base station apparatus 20 determines the size of the information related to an unused occasion(s), based on the third table information and the information indicating row index m. In other words, the controller 210 determines the size of a field of the information related to an unused occasion(s) included in UCI, to be 3 bits. As described above, the controller 210 can recognize the size of a field of the information related to an unused occasion(s) included in UCI, before receiving the UCI from the terminal apparatus 10.

With the configuration, the terminal apparatus 10 can appropriately determine the size of information related to an unused occasion(s), based on third table information and indication information (i.e., information indicating row index m).

The base station apparatus 20 can appropriately recognize the size of information related to an unused occasion(s), based on third table information and indication information (i.e., information indicating row index m). Hence, the base station apparatus 20 can appropriately receive UCI including information related to an unused occasion(s). In a case where the base station apparatus 20 has received information related to an unused occasion(s) from the terminal apparatus 10, the base station apparatus 20 can allocate the unused occasion(s) to a terminal other than the terminal apparatus 10. With this configuration, the base station apparatus 20 can efficiently allocate radio resources to a plurality of terminal apparatuses.

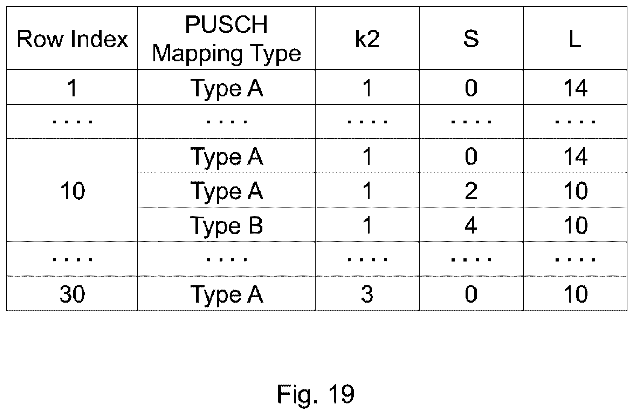

The configuration of the third table is not limited to the example in Fig. 16. As illustrated in Fig. 19, parameter (d1) may be configured individually for each of the three transmission occasions. In this case, the controller 110 may determine the size of information related to an unused occasion(s), based on the number of parameters (d1) associated with a row index.

The configuration of information related to an unused occasion(s) is not limited to the example in Fig. 17. Information related to an unused occasion(s) may indicate the number of transmission occasions to be used. The number of transmission occasions to be used may indicate the number of consecutive transmission occasions. For example, transmission occasions subsequent to the transmission occasions indicated based on the number of transmission occasions may not be used for uplink transmission. In the example in Fig. 14, three transmission occasions are configured in one period, and hence information related to an unused occasion(s) may be a 2-bit sequence possible to express zero to three. Similarly to the above description, assume that "9" is indicated by the information indicating row index m for referring to the third table. In this case, the terminal apparatus 10 may determine the size of information related to an unused occasion(s) to be 2 bits, based on the number of parameters (i.e., three) associated with a row index "10" in the third table. Hence, the terminal apparatus 10 may generate a 2-bit sequence as the information related to an unused occasion(s). In other words, the controller 110 may determine the size of a field of the information related to an unused occasion(s) included in UCI to be ceil(log2(Nt)) by using the number Nt of transmission occasions. Here, the controller 110 may determine the size of the information related to an unused occasion(s) to be ceil(log2(Nt - 1)). The controller 110 may determine the size of the information related to an unused occasion(s), based on a multiplication value of ceil(log2(Nt)) and the number Np of periods. The controller 110 may determine the size of the information related to an unused occasion(s), based on a multiplication value of ceil(log2(Nt - 1) and the number Np of periods.

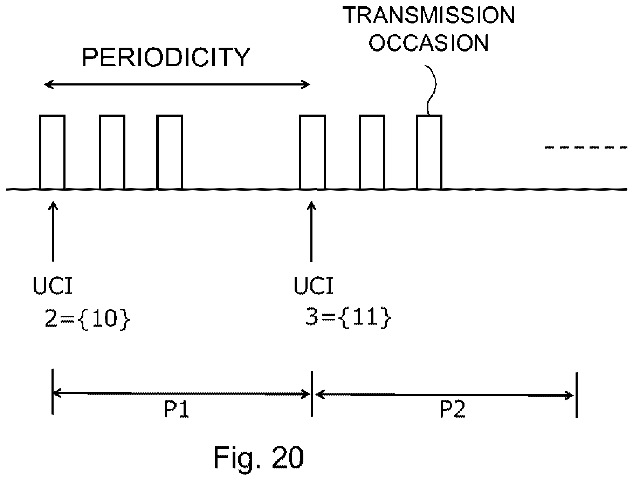

As illustrated in Fig. 20, the controller 110 determines to use the first transmission occasion and the second transmission occasion for uplink transmission in the first period P1. Since the number of transmission occasions to be used is "2", the controller 110 may generate a 2-bit sequence {10} corresponding to a value "2". The communicator 120 may transmit UCI including the sequence to the base station apparatus 20 in the first transmission occasion in the first period P1. In other words, the communicator 120 may indicate, by transmitting the information related to an unused occasion(s) in one given period, use and/or non-use for the transmission occasion(s) in the one given period. Here, the communicator 120 may indicate, by transmitting the information related to an unused occasion(s), use and/or non-use for the transmission occasion(s) in one period after the transmission of the information related to an unused occasion(s). For example, the communicator 120 may indicate, by transmitting the information related to an unused occasion(s) in one given period, use and/or non-use for a transmission occasion(s) in one period subsequent to the one given period.

Similarly, the controller 110 determines to use all of the first transmission occasion to the third transmission occasion in the second period P2, for uplink transmission. Since the number of transmission occasions to be used is "3", the controller 110 may generate a 2-bit sequence {11} corresponding to a value "3". The communicator 120 may transmit UCI including the sequence to the base station apparatus 20 in the first transmission occasion in the second period P2.

The third table may be a table related to uplink transmission resources in DG. For example, the third table may be the second table. The controller 110 may use a table related to uplink transmission resources in DG to determine resources for a plurality of transmission occasions included in one period in CG. The controller 110 may use the second table to determine the size of the information related to an unused occasion(s), in the same manner as the above.

The controller 110 may switch a table for use between the first table and the third table according to configuration information. The first table is considered to be a table to be used in a case where one period includes one transmission occasion, and the third table is considered to be a table to be used in a case where one period includes a plurality of transmission occasions. For example, in a case where the terminal apparatus 10 has received both the third table information and information indicating row index m from the base station apparatus 20, the controller 110 may use the third table. In other words, the controller 110 uses the third table to determine resources for a plurality of transmission occasions included in one period. The controller 110 further uses the third table to determine the size of information related to an unused occasion(s).

In contrast, in a case where the terminal apparatus 10 does not receive one of or both the third table information and information indicating row index m from the base station apparatus 20, the controller 110 may use the first table. In other words, the controller 110 uses the first table (i.e., a parameter (or parameter set) included in the first table) to determine a resource for uplink transmission.

In a case where the second table is used as the third table as described above, the controller 110 may switch a table for use between the first table and the second table according to configuration information. In a case where the terminal apparatus 10 has received both the second table information and information indicating row index m from the base station apparatus 20, the controller 110 may use the second table. In other words, the controller 110 uses the second table (i.e., parameters (or parameter sets) included in the second table) to determine resources for a plurality of transmission occasions included in one period. The controller 110 further uses the second table to determine the size of information related to an unused occasion(s).

In contrast, in a case where the terminal apparatus 10 does not receive one of or both the second table information and information indicating row index m from the base station apparatus 20, the controller 110 may use the first table. In other words, the controller 110 uses the first table (i.e., a parameter (or parameter set) included in the first table) to determine a resource for uplink transmission.

(2) Second Aspect

Configuration information may include first information related to the number of repetitions of uplink transmission (i.e., PUSCH transmission). For example, the first information may be included in a parameter related to CG included in an RRC message. For example, the first information may be included in a ConfiguredGrantConfig IE. The first information may be repK included in a ConfiguredGrantConfig IE. repK denotes the number of repetitions to be applied to a transmitted TB for PUSCH transmission by CG. repK may indicate the number Nt of a plurality of transmission occasions included in one period. In this configuration, the controller 110 determines the size of the information related to an unused occasion(s), based on the value of repK.

The configuration information may include second information related to the number Nt of a plurality of transmission occasions. For example, the second information may be included in a parameter related to CG included in an RRC message. An IE corresponding to the second information may be newly defined in a ConfiguredGrantConfig IE. In this configuration, the controller 110 determines the size of the information related to an unused occasion(s), based on the second information. As described above, the controller 110 may exclude the uplink transmission occasion to be used for transmission of the information related to an unused occasion(s), to determine the size of the information related to an unused occasion(s). For example, the controller 110 may determine the size of the information related to an unused occasion(s) to be the number obtained by subtracting 1 from the number Nt of transmission occasions indicated based on the second information. The controller 110 may determine the size of the information related to an unused occasion(s), based on the second information and the number Np of periods (or information indicating the number Np of periods) (for example, based on a multiplication value of the number Nt of transmission occasions and the number Np of periods). The controller 110 may determine the size of the information related to an unused occasion(s), based on the number Nt of transmission occasions indicated based on the second information - 1 and the number Np of periods (for example, based on a multiplication value of the number Nt of transmission occasions - 1 and the number Np of periods).

With the configuration, the terminal apparatus 10 can appropriately determine the size of information related to an unused occasion(s), based on first information and second information.

Similarly, the controller 210 of the base station apparatus 20 determines the size of the information related to an unused occasion(s), based on first information or second information. As described above, the base station apparatus 20 can recognize the size of a field of the information related to an unused occasion(s) included in UCI, before receiving the UCI from the terminal apparatus 10. Hence, the base station apparatus 20 can appropriately receive UCI including information related to an unused occasion(s).

(3) Third Aspect

Configuration information may include one of or both third information related to the number of transmission occasions of uplink transmission included in one slot and fourth information related to the number of slots included in periodicity configured in CG.

The third information may be included in a parameter related to CG included in an RRC message. For example, the third information may be included in a ConfiguredGrantConfig IE. The third information may be cg-nrofPUSCH-InSlot included in a ConfiguredGrant-Config IE. cg-nrofPUSCH-InSlot denotes the number of consecutive PUSCH transmission occasions in one slot.

The fourth information may be included in a parameter related to CG included in an RRC message. For example, the fourth information may be included in a ConfiguredGrantConfig IE. The fourth information may be cg-nrofSlots included in a ConfiguredGrantConfig IE. cg-nrofSlots denotes the number of consecutive slots allocated to periodicity configured in CG.

In an existing technique, in a case where a plurality of transmission occasions are configured in CG with an unlicensed spectrum channel, cg-nrof-PUSCH-InSlot and cg-nrofSlots above are used. cg-nrofPUSCH-InSlot and cg-nrofSlots above may be applied to a case where a plurality of transmission occasions are configured in one period in CG.

The controller 110 determines the number Nt of transmission occasions included in one period, based on one of or both the third information and the fourth information. The controller 110 then determines the size of the information related to an unused occasion(s), based on the number Nt of transmission occasions. The controller 110 may determine the size of the information related to an unused occasion(s) to be the number obtained by subtracting 1 from the number Nt of transmission occasions indicated based on one of or both the third information and the fourth information. The controller 110 may determine the size of the information related to an unused occasion(s), based on one of or both the third information and the fourth information and the number Np of periods (or information indicating the number Np of periods) (for example, based on a multiplication value of the number Nt of transmission occasions and the number Np of periods). The controller 110 may determine the size of the information related to an unused occasion(s), based on the number Nt of transmission occasions indicated based on one of or both the third information and the fourth information - 1 and the number Np of periods (for example, based on a multiplication value of the number Nt of transmission occasions - 1 and the number Np of periods).

With the configuration, the terminal apparatus 10 can appropriately determine the size of information related to an unused occasion(s), based on one of or both third information and the fourth information.

Similarly, the controller 210 of the base station apparatus 20 determines the size of the information related to an unused occasion(s), based on one of or both the third information and the fourth information. As described above, the controller 210 can recognize the size of a field of the information related to an unused occasion(s) included in UCI, before receiving the UCI from the terminal apparatus 10. Hence, the base station apparatus 20 can appropriately receive UCI including information related to an unused occasion(s).

**(4) Fourth Aspect**

Configuration information may include fifth information related to an offset for determining a slot and/or a symbol position of a transmission occasion in CG. In other words, the fifth information may be used to determine a slot and/or a symbol position of one or each of a plurality of transmission occasions in one period. The fifth information may be used to determine the position of one or each of a plurality of uplink transmissions (i.e., PUSCH transmissions) in one period.

The fifth information may be included in a parameter related to CG included in an RRC message. For example, the fifth information may be included in a ConfiguredGrantConfig IE. The fifth information may be time-DomainOffset included in a ConfiguredGrantConfig IE. timeDomainOffset may be a parameter to be used for a certain mathematical expression for determining a slot and/or a symbol position of a transmission occasion in CG. In the ConfiguredGrantConfig IE, a plurality of pieces of timeDomainOffset may be configured as the fifth information. In a case where a plurality of pieces of timeDomainOffset are configured, this may indicate that a plurality of transmission occasions are configured in one period. For example, the base station apparatus 20 may transmit an RRC message including a list of one or a plurality of pieces of timeDomainOffset. For example, a plurality of pieces of timeDomainOffset included in a list in an ascending order may correspond to a plurality of transmission occasions in an ascending order. In other words, timeDomainOffset included first in the list may correspond to the first transmission occasion in one period, timeDomainOffset included second in the list may correspond to the second transmission occasion in the one period, and timeDomainOffset included third in the list may correspond to the third transmission occasion in the one period.

The controller 110 may determine (decide) the number Nt of transmission occasions, based on the number of pieces of timeDomainOffset. The controller 110 then determines the size of the information related to an unused occasion(s), based on the number Nt of transmission occasions. The controller 110 may determine the size of the information related to an unused occasion(s) to be the number obtained by subtracting 1 from the number Nt of transmission occasions indicated based on the number of pieces of timeDomainOffset. The controller 110 may determine the size of the information related to an unused occasion(s), based on the number of pieces of timeDomainOffset and the number Np of periods (or information indicating the number Np of periods) (for example, based on a multiplication value of the number Nt of transmission occasions and the number Np of periods). The controller 110 may determine the size of the information related to an unused occasion(s), based on the number Nt of transmission occasions indicated based on the number of pieces of timeDomainOffset - 1 and the number Np of periods (for example, based on a multiplication value of the number Nt of transmission occasions - 1 and the number Np of periods).

With the configuration, the terminal apparatus 10 can appropriately determine the size of information related to an unused occasion(s), based on the fifth information.

Similarly, the controller 210 of the base station apparatus 20 determines the size of the information related to an unused occasion(s), based on fifth information. As described above, the controller 210 can recognize the size of a field of the information related to an unused occasion(s) included in UCI, before receiving the UCI from the terminal apparatus 10. Hence, the base station apparatus 20 can appropriately receive UCI including information related to an unused occasion(s).

In the first aspect to the fourth aspect, UCI including information related to an unused occasion(s) may be CG-UCI or another UCI. CG-UCI including information related to an unused occasion(s) may be used in an unlicensed spectrum channel or may be used in a licensed spectrum channel.

In an unlicensed spectrum channel, CG-UCI including information related to an unused occasion(s) may include one of, or a combination of two or more of fields (c1) to (c5) above. In other words, the CG-UCI may include a field of information related to an unused occasion(s) in addition to one of, or a combination of two or more of fields (c1) to (c5). In a case where CG-UCI including information related to an unused occasion(s) is used in a licensed spectrum, the CG-UCI may not include one of, or a combination of two or more of fields (c1) to (c5).

In a case where CG-UCI is used to transmit information related to an unused occasion(s), the multiplexing scheme described in Reference 2 may be used. For example, for multiplexing of CG-UCI including information related to an unused occasion(s) and user data, the multiplexing scheme described in Reference 2 may be used.

[Reference Literature 2] 3GPP TS 38.212 V17.3.0 (2022-09)

## 2. Alteration

Although the present disclosure has been described in accordance with the embodiments, it is understood that the present disclosure is not limited to the embodiments and structures. The present disclosure also includes various alterations and variations within the scope of equivalents. Other combinations including one or more elements included in the embodiments are also included in the scope and spirit of the present disclosure.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

## 3. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note 1)

A terminal apparatus (10) including:

a communicator (120) configured to receive, from a base station apparatus (20), configuration information related to a plurality of transmission occasions included in one period in configured grant (CG); and a controller (110) configured to determine a size of information related to an unused occasion among the plurality of transmission occasions by using the configuration information.

(Supplementary Note 2)

The terminal apparatus according to supplementary note 1, wherein

the configuration information includes

table information for configuring a table related to resources of the plurality of transmission occasions and

indication information indicating an index or a value for referring to the table, the controller is configured to configure the table by using the table information, and,

in the table, the index or value is associated with a parameter related to the resource of each of the plurality of transmission occasions.

(Supplementary Note 3)

The terminal apparatus according to supplementary note 2, wherein the controller is configured to determine the size, based on a number of the parameters each associated with the index or value.

(Supplementary Note 4)

The terminal apparatus according to supplementary note 2, wherein

the controller is configured to determine a number of the plurality of transmission occasions, based on a number of the parameters each associated with the index or value and determine the size, based on the number of the plurality of transmission occasions.

(Supplementary Note 5)

The terminal apparatus according to any one of supplementary notes 2 to 4, wherein the parameter includes one of, or a combination of two or more of the following:

information related to a slot in which uplink transmission is performed, a start symbol of the uplink transmission, a symbol length from the start symbol, a mapping type of the uplink transmission, a redundancy version (RV), information related to an offset or gap between a plurality of uplink transmissions, and information related to an offset for determining one of or both a slot position and a symbol position of one or each of a plurality of uplink transmission occasions.

(Supplementary Note 6)

The terminal apparatus according to any one of supplementary notes 2 to 5, wherein the table information includes, for each of the plurality of transmission occasions, one of, or a combination of two or more of the following:

information related to a slot in which uplink transmission is performed, a start symbol of the uplink transmission, a symbol length from the start symbol, a mapping type of the uplink transmission, a redundancy version (RV), information related to an offset or gap between a plurality of uplink transmissions, and information related to an offset for determining one of or both a slot position and a symbol position of one or each of a plurality of uplink transmission occasions.

(Supplementary Note 7)

The terminal apparatus according to supplementary note 2, wherein the table is a table related to a resource of uplink transmission in dynamic grant (DG).

(Supplementary Note 8)

The terminal apparatus according to any one of supplementary notes 2 to 7, wherein, in Type 1 of the CG, the communicator is configured to

receive a radio resource control (RRC) message including the table information from the base station apparatus and receive an RRC message including the indication information from the base station apparatus.

(Supplementary Note 9)

The terminal apparatus according to any one of supplementary notes 2 to 7, wherein, in Type 2 of the CG, the communicator is configured to

receive a radio resource control (RRC) message including the table information from the base station apparatus and receive downlink control information (DCI) including the indication information from the base station apparatus.

(Supplementary Note 10)

The terminal apparatus according to any one of supplementary notes 2 to 9, wherein

the controller is configured to switch, according to the configuration information, a table for use between

the table and

another table being different from the table and being used in a case where one period includes one transmission occasion.

(Supplementary Note 11)

The terminal apparatus according to supplementary note 1, wherein

the configuration information includes information related to a number of repetitions of uplink transmission or information related to a number of the plurality of transmission occasions, and

the controller is configured to determine the size, based on the number of repetitions or the number of the plurality of transmission occasions.

(Supplementary Note 12)

The terminal according to supplementary note 1, wherein

the configuration information includes one of or both information related to a number of transmission occasions of uplink transmission included in one slot and information related to a number of slots included in periodicity configured in CG, and
the controller is configured to determine the size, based on one of or both the number of transmission occasions and the number of slots.

(Supplementary Note 13)

The terminal apparatus according to supplementary note 1, wherein

the configuration information includes information related to an offset for determining one of or both a slot position and a symbol position of a transmission occasion in the CG, and
the controller is configured to determine the size, based on a number of offsets.

(Supplementary Note 14)

The terminal apparatus according to any one of supplementary notes 1 to 13, wherein
the communicator is configured to transmit the information related to an unused occasion, the information having the determined size, to the base station apparatus.

(Supplementary Note 15)

A method of a terminal apparatus (10), the method including:

receiving, from a base station apparatus (20), configuration information related to a plurality of transmission occasions included in one period in configured grant (CG); and
determining a size of information related to an unused occasion of the plurality of transmission occasions by using the configuration information.

(Supplementary Note 16)

A program causing a processor (101) in a terminal apparatus (10) to execute:

receiving, from a base station apparatus (20), configuration information related to a plurality of transmission occasions included in one period in configured grant (CG); and
determining a size of information related to an unused occasion of the plurality of transmission occasions by using the configuration information.

(Supplementary Note 17)

A non-transitory tangible storage medium having recorded thereon a program causing a processor (101) in a terminal apparatus (10) to execute:

receiving, from a base station apparatus (20), configuration information related to a plurality of transmission occasions included in one period in configured grant (CG); and
determining a size of information related to an unused occasion of the plurality of transmission occasions by using the configuration information.

(Supplementary Note 18)

A base station apparatus (20) comprising:

a communicator (220) configured to transmit, to a terminal apparatus (10), configuration information related to a plurality of transmission occasions included in one period in configured grant (CG); and
a controller (210) configured to determine a size of information related to an unused occasion among the plurality of transmission occasions by using the configuration information.

(Supplementary Note 19)

The base station apparatus according to supplementary note 18, wherein

the configuration information includes

table information for configuring a table related to resources of the plurality of transmission occasions and

indication information indicating an index or a value for referring to the table,

the controller is configured to determine the size based on the table information and the indication information.

(Supplementary Note 20)

The base station apparatus according to supplementary note 19, wherein
the table information includes, for each of the plurality of transmission occasions, one of, or a combination of two or more of the following:

information related to a slot in which uplink transmission from the terminal apparatus is performed,
a start symbol of the uplink transmission,
a symbol length from the start symbol,
a mapping type of the uplink transmission,
a redundancy version (RV),
information related to an offset or gap between a plurality of uplink transmissions, and
information related to an offset for determining one of or both a slot position and a symbol position of one or each of a plurality of uplink transmission occasions.

(Supplementary Note 21)

The base station apparatus according to supplementary note 19 or 20, wherein
the table information is information for configuring a table related to a resource of uplink transmission in dynamic grant (DG).

(Supplementary Note 22)

The base station apparatus according to any one of supplementary notes 19 to 21, wherein, in Type 1 of the CG, the communicator is configured to

transmit a radio resource control (RRC) message including the table information to the terminal apparatus and
transmit an RRC message including the indication information to the terminal apparatus.

(Supplementary Note 23)

The base station apparatus according to any one of supplementary notes 19 to 21, wherein, in Type 2 of the CG, the communicator is configured to

transmit a radio resource control (RRC) message including the table information to the terminal apparatus and
transmit downlink control information (DCI) including the indication information to the terminal apparatus.

(Supplementary Note 24)

The base station apparatus according to supplementary note 18, wherein

the configuration information includes information related to a number of repetitions of uplink transmission or information related to a number of the plurality of transmission occasions, and

the controller is configured to determine the size, based on the number of repetitions or the number of the plurality of transmission occasions.

(Supplementary Note 25)

The base station apparatus according to supplementary note 18, wherein

the configuration information includes one of or both information related to a number of transmission occasions of uplink transmission included in one slot and information related to a number of slots included in periodicity configured in CG, and
the controller is configured to determine the size, based on one of or both the number of transmission occasions and the number of slots.

(Supplementary Note 26)

The base station apparatus according to supplementary note 18, wherein

the configuration information includes information related to an offset for determining one of or both a slot position and a symbol position of a transmission occasion in the CG, and
the controller is configured to determine the size, based on a number of offsets.

(Supplementary Note 27)

A method of a base station apparatus (20), the method including:

transmitting, to a terminal apparatus (10), configuration information related to a plurality of transmission occasions included in one period in configured grant (CG); and
determining a size of information related to an unused occasion among the plurality of transmission occasions by using the configuration information.

(Supplementary Note 28)

A program causing a processor (201) in a base station apparatus (20) to execute:

transmitting, to a terminal apparatus (10), configuration information related to a plurality of transmission occasions included in one period in configured grant (CG); and
determining a size of information related to an unused occasion among the plurality of transmission occasions by using the configuration information.

(Supplementary Note 29)

A non-transitory tangible storage medium having recorded thereon a program causing a processor (201) in a base station apparatus (20) to execute:

transmitting, to a terminal apparatus (10), configuration information related to a plurality of transmission occasions included in one period in configured grant (CG); and
determining a size of information related to an unused occasion among the plurality of transmission occasions by using the configuration information.

(Supplementary Note 30)

A terminal apparatus (10) including:

a receiver (122) configured to receive, from a base station apparatus (20), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion;
a controller (110) configured to determine a number of bits of a bitmap of the UCI, based on the information for configuring the number of bits of the UCI; and
a transmitter (121) configured to perform each of a plurality of PUSCH transmissions, based on the information for configuring the plurality of PUSCH transmission occasions, wherein
the controller is configured to multiplex the bitmap of the UCI having the determined number of bits, in each of the plurality of PUSCH transmissions.

(Supplementary Note 31)

The terminal apparatus according to supplementary note 30, wherein
a value "1" in the bitmap indicates that a transmission occasion is not used for the PUSCH transmission, while a value "0" in the bitmap indicates that a transmission occasion is used for the PUSCH transmission.

(Supplementary Note 32)

The terminal apparatus according to supplementary note 30 or 31, wherein
the information for configuring the plurality of PUSCH transmission occasions includes one of or both information for configuring periodicity of the plurality of PUSCH transmission occasions and information on the plurality of PUSCH transmission occasions included in one periodicity.

(Supplementary Note 33)

The terminal apparatus according to any one of supplementary notes 30 to 32, wherein
the controller is configured to

determine whether or not the configured uplink grant corresponding to each of the plurality of PUSCH transmissions is used, in a media access control (MAC) layer and
provide information on the configured uplink grant, from the MAC layer to a physical layer.

(Supplementary Note 34)

The terminal apparatus according to any one of supplementary notes 30 to 33, wherein
each of the bits included in the bitmap corresponds to each of the plurality of PUSCH transmission occasions in an ascending order.

(Supplementary Note 35)

A method of a terminal apparatus (10), the method including:

receiving, from a base station apparatus (20), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion;
determining a number of bits of a bitmap of the UCI, based on the information for configuring the number of bits of the UCI; and
performing each of a plurality of PUSCH transmissions, based on the information for configuring the plurality of PUSCH transmission occasions, wherein
the method further comprises
multiplexing the bitmap of the UCI having the determined number of bits, in each of the plurality of PUSCH transmissions.

(Supplementary Note 36)

The method of the terminal apparatus according to supplementary note 35, wherein a value "1" in the bitmap indicates that a transmission occasion is not used for the PUSCH transmission, while a value "0" in the bitmap indicates that a transmission occasion is used for the PUSCH transmission.

(Supplementary Note 37)

The method of the terminal apparatus according to supplementary note 35 or 36, wherein the information for configuring the plurality of PUSCH transmission occasions includes one of or both information for configuring periodicity of the plurality of PUSCH transmission occasions and information on the plurality of PUSCH transmission occasions included in one periodicity.

(Supplementary Note 38)

The method of the terminal apparatus according to any one of supplementary notes 35 to 37, the method further comprising:

determining whether or not the configured uplink grant corresponding to each of the plurality of PUSCH transmissions is used, in a media access control (MAC) layer; and
providing information on the configured uplink grant, from the MAC layer to a physical layer.

(Supplementary Note 39)

The method of the terminal apparatus according to any one of supplementary notes 35 to 38, wherein each of the bits included in the bitmap corresponds to each of the plurality of PUSCH transmission occasions in an ascending order.

(Supplementary Note 40)

A program causing a processor (101) in a terminal apparatus (10) to execute:

receiving, from a base station apparatus (20), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; determining a number of bits of a bitmap of the UCI, based on the information for configuring the number of bits of the UCI; and
performing each of a plurality of PUSCH transmissions, based on the information for configuring the plurality of PUSCH transmission occasions, wherein the program causes the processor to further execute multiplexing the bitmap of the UCI having the determined number of bits, in each of the plurality of PUSCH transmissions.

(Supplementary Note 41)

A non-transitory tangible storage medium having recorded thereon a program causing a processor (101) in a terminal apparatus (10) to execute:

receiving, from a base station apparatus (20), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; determining a number of bits of a bitmap of the UCI, based on the information for configuring the number of bits of the UCI; and
performing each of a plurality of PUSCH transmissions, based on the information for configuring the plurality of PUSCH transmission occasions, wherein the program causes the processor to further execute multiplexing the bitmap of the UCI having the determined number of bits, in each of the plurality of PUSCH transmissions.

(Supplementary Note 42)

A base station apparatus (20) including:

a transmitter (221) configured to transmit, to a terminal apparatus (10), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; and
a receiver (222) configured to receive a plurality of PUSCH transmissions, wherein a bitmap of the UCI having a number of bits determined based on the information for configuring the number of bits of the UCI is multiplexed in each of the plurality of PUSCH transmissions.

(Supplementary Note 43)

The base station apparatus according to supplementary note 42, wherein
a value "1" in the bitmap indicates that a transmission occasion is not used for the PUSCH transmission, while a value "0" in the bitmap indicates that a transmission occasion is used for the PUSCH transmission.

(Supplementary Note 44)

The base station apparatus according to supplementary note 42 or 43, wherein
the information for configuring the plurality of PUSCH transmission occasions includes one of or both information for configuring periodicity of the plurality of PUSCH transmission occasions and information on the plurality of PUSCH transmission occasions included in one periodicity.

(Supplementary Note 45)

The base station apparatus according to any one of supplementary notes 42 to 44, wherein
each of the bits included in the bitmap corresponds to each of the plurality of PUSCH transmission occasions in an ascending order.

(Supplementary Note 46)

A method of a base station apparatus (20), the method including:

transmitting, to a terminal apparatus (10), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; and receiving a plurality of PUSCH transmissions, wherein
a bitmap of the UCI having a number of bits determined based on the information for configuring the number of bits of the UCI is multiplexed in each of the plurality of PUSCH transmissions.

(Supplementary Note 47)

A program causing a processor (201) in a base station apparatus (20) to execute:

transmitting, to a terminal apparatus (10), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; and receiving a plurality of PUSCH transmissions, wherein
a bitmap of the UCI having a number of bits determined based on the information for configuring the number of bits of the UCI is multiplexed in each of the plurality of PUSCH transmissions.

(Supplementary Note 48)

A non-transitory tangible storage medium having recorded thereon a program causing a processor (201) in a base station apparatus (20) to execute:

transmitting, to a terminal apparatus (10), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; and receiving a plurality of PUSCH transmissions, wherein
a bitmap of the UCI having a number of bits determined based on the information for configuring the number of bits of the UCI is multiplexed in each of the plurality of PUSCH transmissions.

The disclosure contents of the above-mentioned related art documents and reference literature are incorporated herein by reference.

**Claims**

1. A terminal apparatus (10) comprising:

a receiver (122) configured to receive, from a base station apparatus (20), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion;
a controller (110) configured to determine a number of bits of a bitmap of the UCI, based on the information for configuring the number of bits of the UCI; and

a transmitter (121) configured to perform each of a plurality of PUSCH transmissions, based on the information for configuring the plurality of PUSCH transmission occasions, wherein
the controller is configured to multiplex the bitmap of the UCI having the determined number of bits, in each of the plurality of PUSCH transmissions.

2. The terminal apparatus according to claim 1, wherein
a value "1" in the bitmap indicates that a transmission occasion is not used for the PUSCH transmission, while a value "0" in the bitmap indicates that a transmission occasion is used for the PUSCH transmission.

3. The terminal apparatus according to claim 1 or 2, wherein
the information for configuring the plurality of PUSCH transmission occasions includes one of or both information for configuring periodicity of the plurality of PUSCH transmission occasions and information on the plurality of PUSCH transmission occasions included in one periodicity.

4. The terminal apparatus according to any one of claims 1 to 3, wherein
the controller is configured to

   determine whether or not the configured uplink grant corresponding to each of the plurality of PUSCH transmissions is used, in a media access control (MAC) layer and
   provide information on the configured uplink grant, from the MAC layer to a physical layer.

5. The terminal apparatus according to any one of claims 1 to 4, wherein
each of the bits included in the bitmap corresponds to each of the plurality of PUSCH transmission occasions in an ascending order.

6. A method of a terminal apparatus (10), the method comprising:

   receiving, from a base station apparatus (20), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion;
   determining a number of bits of a bitmap of the UCI, based on the information for configuring the number of bits of the UCI; and
performing each of a plurality of PUSCH transmissions, based on the information for configuring the plurality of PUSCH transmission occasions, wherein
the method further comprises
multiplexing the bitmap of the UCI having the determined number of bits, in each of the plurality of PUSCH transmissions.

7. The method of the terminal apparatus according to claim 6, wherein
a value "1" in the bitmap indicates that a transmission occasion is not used for the PUSCH transmission, while a value "0" in the bitmap indicates that a transmission occasion is used for the PUSCH transmission.

8. The method of the terminal apparatus according to claim 6 or 7, wherein
the information for configuring the plurality of PUSCH transmission occasions includes one of or both information for configuring periodicity of the plurality of PUSCH transmission occasions and information on the plurality of PUSCH transmission occasions included in one periodicity.

9. The method of the terminal apparatus according to any one of claims 6 to 8, the method further comprising:

   determining whether or not the configured uplink grant corresponding to each of the plurality of PUSCH transmissions is used, in a media access control (MAC) layer; and
   providing information on the configured uplink grant, from the MAC layer to a physical layer.

10. The method of the terminal apparatus according to any one of claims 6 to 9, wherein
each of the bits included in the bitmap corresponds to each of the plurality of PUSCH transmission occasions in an ascending order.

11. A base station apparatus (20) comprising:

   a transmitter (221) configured to transmit, to a terminal apparatus (10), a radio resource control (RRC) message including a configured grant (CG) configuration, the CG configuration including information for configuring a plurality of physical uplink shared channel (PUSCH) transmission occasions based on a configured uplink grant, and information for configuring a number of bits of uplink control information (UCI) including information related to an unused transmission occasion; and
   a receiver (222) configured to receive a plurality of PUSCH transmissions, wherein a bitmap of the UCI having a number of bits determined based on the information for configuring the number of bits of the UCI is multiplexed in each of the plurality of PUSCH transmissions.

12. The base station apparatus according to claim 11, wherein a value "1" in the bitmap indicates that a transmission occasion is not used for the PUSCH transmission, while a value "0" in the bitmap indicates that a transmission occasion is used for the PUSCH transmission.

13. The base station apparatus according to claim 11 or 12, wherein the information for configuring the plurality of PUSCH transmission occasions includes one of or both information for configuring periodicity of the plurality of PUSCH transmission occasions and information related to the plurality of PUSCH transmission occasions included in one periodicity.

14. The base station apparatus according to any one of claims 11 to 13, wherein each of the bits included in the bitmap corresponds to each of the plurality of PUSCH transmission occasions in an ascending order.

Fig. 1

| TERMINAL APPARATUS | BASE STATION APPARATUS |
|---|---|
| SDAP | SDAP |
| PDCP | PDCP |
| RLC | RLC |
| MAC | MAC |
| PHY | PHY |

10                                    20

Fig. 2

Fig. 3

10

### TERMINAL APPARATUS

101

PROCESSOR

103

INPUT/OUTPUT
INTERFACE

105

MEMORY

102

RADIO INTERFACE

104

Fig. 4

10

TERMINAL APPARATUS

120

COMMUNICATOR

110

CONTROLLER

TRANSMITTER ~121

RECEIVER ~122

Fig. 5

20

BASE STATION APPARATUS

201

PROCESSOR

202

MEMORY

203

NETWORK
INTERFACE

204

RADIO INTERFACE

205

TO
ANOTHER
APPARATUS

Fig. 6

Fig. 7

Fig. 8

Fig. 9

10

TERMINAL
APPARATUS

20

BASE STATION
APPARATUS

S1001

RRC MESSAGE

S1002

DCI

S1003

PERFORM TRANSMISSION
OPERATION

S1004

PERFORM RECEPTION
OPERATION

Fig. 10

| Row Index | PUSCH Mapping Type | k2 | S | L |
|---|---|---|---|---|
| 1 | Type A | j | 0 | 14 |
| 2 | Type A | j | 0 | 12 |
| . . . . | . . . . | . . . . | . . . . | . . . . |
| 30 | Type B | j+2 | 0 | 10 |

Fig. 11

| Row Index | PUSCH Mapping Type | k2 | S | L |
|---|---|---|---|---|
| 1 | Type A | 1 | 0 | 14 |
| . . . . | . . . . | . . . . | . . . . | . . . . |
| 10 | Type A | 1 | 0 | 14 |
| | Type A | | 2 | 10 |
| | Type B | | 4 | 10 |
| | Type B | | 8 | 10 |
| . . . . | . . . . | . . . . | . . . . | . . . . |
| 15 | Type A | 3 | 0 | 10 |

Fig. 12

Fig. 13

Fig. 14

Fig. 15

| Row Index | PUSCH Mapping Type | k2 | S | L |
|---|---|---|---|---|
| 1 | Type A | 1 | 0 | 14 |
| . . . . | . . . | . . . . | . . . . | . . . . |
| 10 | Type A | 1 | 0 | 14 |
| | Type A | | 2 | 10 |
| | Type B | | 4 | 10 |
| . . . . | . . . | . . . . | . . . . | . . . . |
| 30 | Type A | 3 | 0 | 10 |

Fig. 16

Fig. 17

Fig. 18

| Row Index | PUSCH Mapping Type | k2 | S | L |
|---|---|---|---|---|
| 1 | Type A | 1 | 0 | 14 |
| . . . . | . . . . | . . . . | . . . . | . . . . |
| 10 | Type A | 1 | 0 | 14 |
| | Type A | 1 | 2 | 10 |
| | Type B | 1 | 4 | 10 |
| . . . . | . . . . | . . . . | . . . . | . . . . |
| 30 | Type A | 3 | 0 | 10 |

Fig. 19

Fig. 20

## INTERNATIONAL SEARCH REPORT

| International application No. |
| --- |
| **PCT/JP2024/000236** |

| A. | CLASSIFICATION OF SUBJECT MATTER |
| --- | --- |

*H04W 72/115*(2023.01)i; *H04W 28/06*(2009.01)i; *H04W 72/21*(2023.01)i; *H04W 72/231*(2023.01)i; *H04W 72/0446*(2023.01)i; *H04W 72/1268*(2023.01)i
FI: H04W72/115; H04W72/0446; H04W72/231; H04W72/1268; H04W72/21; H04W28/06

According to International Patent Classification (IPC) or to both national classification and IPC

| B. | FIELDS SEARCHED |
| --- | --- |

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | SONY. Considerations on XR-specific capacity enhancements. 3GPP TSG RAN WG 2 #121 R 2-2301092. Internet<URL:https://www.3gpp.org/ftp/tsg_ran/WG 2_RL 2/TSGR 2_121/Docs/ R 2-2301092.zip>. 16 February 2023<br>p. 1, section 1 | 1-14 |
| A | NOKIA (Rapporteur). 3GPP; TSG RAN; NR; Study on XR enhancements for NR (Release 18). 3GPP TSG RAN WG 2#121 R 2-2300152. Internet<URL:https://www.3gpp.org/ftp/ tsg_ran/WG 2_RL 2/TSGR 2_121/Docs/R 2-2300152.zip>. 16 February 2023<br>p. 30, scheme 6.8 | 1-14 |
| A | GOOGLE INC. On XR-specific capacity enhancements techniques. 3GPP TSG RAN WG 1 #111 R 1-2212386. Internet<URL:https://www.3gpp.org/ftp/tsg_ran/WG 1_RL 1/TSGR 1_111/Docs/R 1-2212386.zip>. 07 November 2022<br>pp. 1-2 | 1-14 |

[✓] Further documents are listed in the continuation of Box C.  [ ] See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 February 2024** | **09 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/000236**

### C.    DOCUMENTS CONSIDERED TO BE RELEVANT

| Category* | Citation of document, with indication, where appropriate, of the relevant passages | Relevant to claim No. |
|---|---|---|
| P, A | DENSO CORPORATION. Discussion on XR-specific capacity enhancements. 3GPP TSG RAN WG 1 #112 R 1-2301034. Internet<URL:https://www.3gpp.org/ftp/tsg_ran/WG 1_RL 1/ TSGR 1_112/Docs/R 1-2301034.zip>. 17 February 2023<br>section 2 | 1-14 |

## REFERENCES CITED IN THE DESCRIPTION

**Patent documents cited in the description**

- JP 2023023442 A

**Non-patent literature cited in the description**

- *3GPP TR 38.838 V17.0.0*, December 2021
- *3GPP TS 38.214 V17.0.0*, December 2021